(19) **Europäisches Patentamt**
**European Patent Office**
**Office européen des brevets**

(11) **EP 2 187 136 A2**

(12) **EUROPÄISCHE PATENTANMELDUNG**

(43) Veröffentlichungstag:
**19.05.2010  Patentblatt 2010/20**

(51) Int Cl.:
*F24D 12/02* (2006.01)  *F24D 19/10* (2006.01)

(21) Anmeldenummer: **09012892.7**

(22) Anmeldetag: **13.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **17.11.2008  DE 102008057730**

(71) Anmelder: **Brüning, Olaf**
**71543 Wüstenrot (DE)**

(72) Erfinder: **Brüning, Olaf**
**71543 Wüstenrot (DE)**

(74) Vertreter: **Wörz, Volker Alfred**
**Dreiss Patentanwälte**
**Postfach 10 37 62**
**70032 Stuttgart (DE)**

(54) **Verfahren zum Betreiben eines Systems zum Transport thermischer Energie über ein flüssiges Medium**

(57)     Die Erfindung betrifft ein Verfahren zum Betreiben eines Systems zum Transport thermischer Energie über ein flüssiges Medium, wobei das System einen Erzeugerkreis (1) und einen Verbraucherkreis (2) umfasst, die über einen Entkoppler (100) miteinander verbunden sind. Eine Vorlauftemperatur (12) des Verbraucherkreises (2) wird ohne Anhebung der Rücklauftemperatur (14) des Erzeugerkreises (1) durch eine Regelung und/oder Steuerung zumindest eines Wärmeerzeugers des Erzeugerkreises (1) in Abhängigkeit von Temperaturwerten (11, 12, 13, 14, 16, 17) geregelt, die durch Sensoreinrichtungen (101 bis 106, 105n, 106n) zur Erfassung der Temperatur des flüssigen Mediums im Erzeugerkreis (1) und im Verbraucherkreis (2) gemessen werden. Außerdem betrifft die Erfindung ein entsprechendes System zum Transport thermischer Energie über ein flüssiges Medium, wobei Sensoreinrichtungen (101 bis 106, 105n, 106n) zur Erfassung der Temperatur des flüssigen Mediums derart in dem System angeordnet sind, dass sie eine Vorlauftemperatur (11) und eine Rücklauftemperatur (14) des Erzeugerkreises (1) und eine Vorlauftemperatur (12) und eine Rücklauftemperatur (13) des Verbraucherkreises (2) messen und dass Mittel zur Regelung und/oder Steuerung die Vorlauftemperatur (12) des Verbraucherkreises (2) ohne Anhebung der Rücklauftemperatur (14) des Erzeugerkreises (1) in Abhängigkeit von den gemessenen Temperaturwerten (11, 12, 13, 14) regeln und/oder steuern.

Fig. 1

**Beschreibung**

Die vorliegende Erfindung betrifft ein Verfahren zum Betreiben eines Systems zum Transport thermischer Energie über ein flüssiges Medium, wobei das System einen Erzeugerkreis und einen Verbraucherkreis umfasst, die über einen hydraulischen Entkoppler miteinander verbunden sind. Außerdem betrifft die Erfindung ein entsprechendes System zum Transport thermischer Energie über ein flüssiges Medium.

Ein Verfahren und ein System der eingangs genannten Art ist in unterschiedlichen Ausführungsformen im Stand der Technik beschrieben. Die Druckschrift EP 1 154 205 B1 beschreibt ein Wärmetransportsystem mit einem Erzeugerkreis und einem Verbraucherkreis, die über ein hydraulischen Entkoppler miteinander verbunden sind. Der Erzeugerkreis umfasst mehrere Wärmeerzeugungseinrichtungen, die Wärme an ein Flüssigkeitsmedium abgeben, das in einem Rohrsystem zirkuliert. Das Rohrsystem ist aus einem ersten Rohrsystem des Erzeugerkreises und einem zweiten Rohrsystem des Verbraucherkreises zusammengesetzt. Der hydraulische Entkoppler ist in Form einer Bypassleitung oder einer hydraulischen Weiche realisiert.

Im Erzeugerkreis ist jeder Wärmeerzeugungseinrichtung eine Pumpe zugeordnet, die zum Umwälzen des in dem ersten Rohrsystem befindlichen Flüssigkeitsmediums dient. Außerdem ist jeder Wärmeerzeugungseinrichtung auch eine Volumenstrommesseinrichtung zugeordnet, mit deren Hilfe der die jeweilige Wärmerzeugungseinrichtung passierende Volumenstrom gemessen und einer Steuereinrichtung zugeführt wird.

Der Verbraucherkreis enthält mehrere Wärmeabgabeeinrichtungen, durch die das Flüssigkeitsmedium des Erzeugerkreises hindurchfließt. Auch im Verbraucherkreis ist eine Sensoreinrichtung vorgesehen, die den Gesamt-Volumenstrom des Flüssigkeitsmediums in dem Verbraucherkreis misst. Mit Hilfe der Sensoreinrichtung zur Erfassung des Volumenstroms des Flüssigkeitsmediums im Verbraucherkreis und der Steuereinrichtung wird erreicht, dass die Durchsatzmenge des Flüssigkeitsmediums in dem Erzeugerkreis regelbar ist, so dass ein erhöhter Volumenstrom in den Wärmeabgabeeinrichtungen des Verbraucherkreises durch eine Erhöhung des Durchsatzes des Flüssigkeitsmediums in dem Erzeugerkreis kompensiert werden kann. Ziel des bekannten Verfahrens ist es, dass die Volumenströme im Erzeuger- und Verbraucherkreis gleich groß sind und somit der Durchfluss durch den hydraulischen Entkoppler gleich Null ist. Eine ungewollte Anhebung der erzeugerseitigen Rücklauftemperatur wird verhindert. Ein Nachteil des beschriebenen Stands der Technik besteht darin, dass zur Regelung des Wärmetransports Volumenströme erfasst werden müssen, und hierfür entsprechend aufwendige und teure Sensoren benötigt werden.

Die EP 0 874 200 A1 beschreibt eine Heizungsanlage mit einem Erzeugerkreis und einem Verbraucherkreis mit einer gemeinsamen Vorlaufleitung und einer Rücklaufleitung, die durch eine hydraulische Weiche verbunden sind. Der Aufbau entspricht im Wesentlichen dem aus der EP 0 874 200 A1 bekannten Aufbau. Die Vorlauftemperatur und die Rücklauftemperatur des Erzeugerkreises sowie die Vorlauftemperatur und die Rücklauftemperatur des Verbraucherkreises werden sensorisch erfasst. Die Temperaturwerte sind abhängig vom Volumenstrom, der durch die hydraulische Weiche fließt. Diese Abhängigkeit wird dazu genutzt, den Erzeugerkreis zu beeinflussen und den Volumenstrom durch die hydraulische Weiche zu minimieren. Es handelt sich also um eine Regelung bzw. Steuerung des durch die hydraulische Weiche fließenden Volumenstroms in Abhängigkeit von Temperaturwerten im Erzeugerkreis und im Verbraucherkreis.

Beide Systeme haben den Nachteil, dass sie die durch die Wärmeerzeuger an ein Erzeugernetz abgegebene Wärmeleistung nicht beeinflussen. Sie sind deshalb als alleiniges System nicht zur Regelung und Steuerung einer Wärmeerzeugungsanlage geeignet. Die Leistungsregelung der Wärmeerzeuger muss durch ein weiteres, nicht beschriebenes System erfolgen.

Der vorliegenden Erfindung liegt die Aufgabe zugrunde, bei einem System zum Transport thermischer Energie über ein flüssiges Medium die verbraucherseitige Vorlauftemperatur beziehungsweise die erzeugerseitige Wärmeabgabe ohne Verwendung von Sensoren zur Erfassung von Volumenströmen zu regeln und/oder zu steuern.

Diese Aufgabe wird bei dem Verfahren gemäß dem Oberbegriff des Anspruchs 1 dadurch gelöst, dass eine Vorlauftemperatur des Verbraucherkreises ohne Anhebung der Rücklauftemperatur des Erzeugerkreises durch eine Regelung und/oder Steuerung zumindest eines Wärmeerzeugers des Erzeugerkreises in Abhängigkeit von Temperaturwerten geregelt wird, die durch Sensoreinrichtungen zur Erfassung der Temperatur des flüssigen Mediums im Erzeugerkreis und im Verbraucherkreis gemessen werden. Der Wärmeerzeuger umfasst dabei insbesondere eine Wärmequelle, zum Beispiel einen Brenner oder eine Wärmepumpe.

Die Erfindung sieht vor, dass der Erzeugerkreis und der Verbraucherkreis hydraulisch entkoppelt sind. Der Vorteil einer hydraulischen Entkopplung von Wärmeerzeugungsanlage und Wärmeverbrauchern, die beispielsweise mittels einer hydraulischen Weiche erfolgen kann, besteht darin, dass sich die Volumenströme im Erzeugerkreis und im Verbraucherkreis nicht gegenseitig beeinflussen.

Die Verwendung eines hydraulischen Entkopplers bringt einen Nachteil mit sich, der gerade durch die Erfindung jedoch beseitigt werden kann. Ist der Volumenstrom im Erzeugerkreis größer als der Volumenstrom im Verbraucherkreis, dann fließt die Differenz der Volumenströme zum Ausgleich der Volumenströme vom erzeugerseitigen Vorlauf zum erzeugerseitigen Rücklauf, wodurch die Rücklauftemperatur im Erzeugerkreis ansteigt. Der Fall, dass die erzeugerseitige Rücklauftemperatur höher ist als die verbraucherseitige Rücklauftemperatur, ist in modernen Wärmeerzeugungsanlagen unerwünscht, weil sich dadurch der Wirkungsgrad eines Brennwertkessels verschlechtert oder der Betrieb eines Blockheizkraftwerks nicht möglich ist. Die Erfindung ermöglicht den Einsatz eines hydraulischen Entkopplers, ohne diesen in der Praxis auftretenden Nachteil in Kauf nehmen zu müssen. Vielmehr erlaubt es die Erfindung, eine Wärmeerzeugeranlage mit einer hydraulischen Entkopplung, bei der eine ungewollte Anhebung der erzeugerseitigen Rücklauftemperatur sicher verhindert wird, d.h. die Wärmeerzeugeranlage mit einem besonders hohen Wirkungsgrad betrieben werden kann, zu realisieren. Gleichzeitig erlaubt es die Erfindung, dass eine Absenkung der erzeugerseitigen Vorlauftemperatur durch eine gezielte Beeinflussung des Volumenstroms durch den hydraulischen Entkoppler vom verbraucherseitigen Rücklauf zum verbraucherseitigen Vorlauf möglich ist.

Neben dieser Möglichkeit weist die Erfindung jedoch noch zahlreiche weitere Vorteile auf: Erfindungsgemäß kann jeder Wärmeerzeuger mit einer Vorlauftemperatur betrieben werden, die so wenig wie möglich über dem Sollwert der verbraucherseitigen Vorlauftemperatur liegt. Weiterhin kann die zu erzeugende Gesamtwärmeleistung erfindungsgemäß auch gezielt auf die einzelnen Wärmeerzeuger verteilt werden. Erfindungsgemäß wird zudem vorgeschlagen, dass die Verteilung der Wärmeleistung auf die einzelnen im Betrieb befindlichen Wärmeerzeuger variabel ist, sodass die Wärmelast derart auf die Erzeuger verteilt werden kann, dass diese möglichst nahe an ihrem maximal möglichen Wirkungsgrad betrieben werden. Außerdem ist erfindungsgemäß erkannt worden, dass Wärmeerzeuger sämtlicher Bauart miteinander kombiniert werden können.

Die vorliegende Erfindung ist ganz allgemein in sämtlichen System zum Transport von thermischer Energie über ein flüssiges Medium einsetzbar. Insbesondere ist die Erfindung nicht nur für ein Einsatz in Systemen zur Wärmeerzeugung, sondern auch in Anlagen zur Kälteerzeugung geeignet.

Gemäß einer vorteilhaften Ausführungsform der Erfindung wird vorgeschlagen, dass die Vorlauftemperatur des Verbraucherkreises auch bei einer schwankenden Vorlauftemperatur des Erzeugerkreises auf einen vorgebbaren Wert geregelt und/oder gesteuert wird, wobei einem Verbrauchernetzvorlaufvolumenstrom eine bestimmte Menge an flüssigem Medium aus einem Verbrauchernetzrücklaufvolumenstrom gezielt beigemischt wird. Die verbraucherseitige Vorlauftemperatur bleibt auch bei schwankenden Vorlauftemperaturen der Wärmeerzeuger, zum Beispiel bei einstufigen Kesseln mit Schalthysterese, durch eine gezielte Rücklauf-Beimischung im hydraulischen Entkoppler konstant.

Gemäß einer vorteilhaften Ausführungsform der Erfindung wird vorgeschlagen, dass die Drehzahl einer Pumpe des mindestens einen Wärmeerzeugers des Erzeugerkreises in Abhängigkeit von der Leistung des mindestens einen Wärmeerzeugers derart eingestellt wird, dass die Rücklauftemperatur des Erzeugerkreises nicht höher als die verbraucherseitige Rücklauftemperatur ist.

Gemäß einer vorteilhaften Ausgestaltung der Erfindung wird vorgeschlagen, dass mindestens einer der Wärmeerzeuger unabhängig von einer vorgebbaren Vorlauftemperatur des Verbraucherkreises und/oder eine Rücklauftemperatur des Verbraucherkreises mit Nennleistung betrieben wird. Die Wärmeerzeuger können also unabhängig von der verbraucherseitigen Rücklauftemperatur und der gewünschten verbraucherseitigen Vorlauftemperatur ihre Nennleistung abgeben, vorausgesetzt, die maximal erlaubte Anlagen-Betriebstemperatur wird nicht überschritten.

Vorteilhafterweise wird im Rahmen der Regelung der Vorlauftemperatur des Verbraucherkreises bei Bedarf gezielt eine Auswahl der Wärmeerzeuger zugeschaltet beziehungsweise abgeschaltet.

Gemäß einer bevorzugten Weiterbildung der Erfindung wird vorgeschlagen, dass eine zu erzeugende Wärmeleistung derart auf mehrere Wärmeerzeuger verteilt wird, dass möglichst viele der dazu geschalteten Wärmeerzeuger mit ihrem optimalen Wirkungsgrad betrieben werden.

Bei einer weiteren Ausgestaltungsform der Erfindung ist vorgesehen, dass der Volumenstrom im Transportsystem derart gesteuert und/oder geregelt ist, dass ein Volumenstrom des flüssigen Mediums vom Vorlauf des Erzeugerkreises über den Entkoppler in den Rücklauf des Erzeugerkreises verhindert wird.

Bei einer weiteren Ausgestaltungsform der Erfindung wird vorgeschlagen, dass die Vorlauftemperatur zumindest eines Wärmeerzeugers so wenig wie möglich über der geforderten verbraucherseitigen Vorlauftemperatur automatisch eingestellt wird. Dadurch wird ein ineffizienter Betrieb des zumindest einen Wärmeerzeugers mit sehr hoher Kesselleistung bei sehr geringer Drehzahl der zugehörigen Pumpe und ohne Rücklaufanhebung verhindert.

Um die Vorlauftemperatur zumindest eines Wärmeerzeugers auf einen geforderten Wert anzuheben, wird der Wärmeerzeuger bis zum Erreichen des Werts mit einer höheren als zum Erreichen des Werts erforderlichen Wärmeleistung betrieben. Die Wärmequelle (z.B. Brenner) wird also mit einer höheren Leistung betrieben als über den Wärmeerzeuger (z.B. Pumpe) abgegeben wird. In entsprechender Weise kann die Vorlauftemperatur zumindest eines Wärmeerzeugers auf einen geforderten Wert reduziert werden, indem der Wärmeerzeuger bis zum Erreichen des Werts mit einer niedrigeren als zum Erreichen des Werts erforderlichen Wärmeleistung betrieben wird. Über den Wärmeerzeuger (z.B. Pumpe) wird also eine höhere Leistung aus dem System abgeführt als über die Wärmequelle (z.B. Brenner) zugeführt wird.

Als eine weitere Lösung der Aufgabe der vorliegenden Erfindung wird ausgehend von dem System gemäß dem Oberbegriff des Anspruchs 15 vorgeschlagen, dass das System Mittel zur Ausführung eines Verfahrens nach einem der Ansprüche 1 bis 14 aufweist. Insbesondere wird vorgeschlagen, dass Sensoreinrichtungen zur Erfassung der Temperatur des flüssigen Mediums derart in dem System angeordnet sind, dass sie eine Vorlauftemperatur und eine Rücklauftemperatur des Erzeugerkreises und eine Vorlauftemperatur und eine Rücklauftemperatur des Verbraucherkreises am hydraulischen Entkoppler messen und dass Mittel zur Regelung und/oder Steuerung die Vorlauftemperatur des Verbraucherkreises ohne Anhebung der Rücklauftemperatur des Erzeugerkreises in Abhängigkeit von den gemessenen Temperaturwerten regeln und/oder steuern.

Bei einer weiteren Ausgestaltungsform der Erfindung ist vorgesehen, dass die Mittel zur Ausführung des Verfahrens eine Steuerungs- und/oder Regelungseinrichtung zur Steuerung und/oder Regelung des Systems umfassen. Insbesondere handelt es sich um eine Steuerungs- und/oder Regelungseinrichtung zur Steuerung und/oder Regelung der Vorlauftemperatur des Verbraucherkreises.

Bei einer vorteilhaften Weiterbildung weist die Steuerungs- und/oder Regelungseinrichtung ein darin abgelegtes Pumpenkennlinienfeld und/oder eine darin abgelegte Ventilkennlinie auf.

Vorzugsweise stellt die Steuerungs- und/oder Regelungseinrichtung anhand einer darin abgelegten Ventilkennlinie ein Stellsignal an das dem jeweiligen Wärmeerzeuger zugeordnete Mischventil und/oder Verteilventil derart ein, dass mehrere eintrittseitige Volumenströme des Mischventils und/oder mehrere austrittseitige Volumenströme des Verteilventils in einem von der Steuerungseinrichtung und/oder Regelungseinrichtung vorgegebenen Verhältnis zueinander stehen.

Vorzugsweise umfassen die Mittel zur Ausführung des Verfahrens ein Computerprogramm, das auf einem Rechengerät, insbesondere einem Prozessor, der Steuerungs- und/oder Regelungseinrichtung ablauffähig ist. Vorteilhafterweise ist das Computerprogramm modular aufgebaut. Als Programmiersystem zur Erstellung des Computerprogramms kann insbesondere eine nach der DIN EN 61131-3 genormte Programmiersprache zum Einsatz kommen, beispielsweise die Programmiersoftware Step 7 der SIMATIC S7 SPS-Familie der Siemens AG, München.

Bei einer weiteren Ausgestaltungsform der Erfindung ist vorgesehen, dass das Computerprogramm zumindest über ein Modul zur Regelung der Vorlauftemperatur des Verbraucherkreises, über ein Modul zur Steuerung der Verteilung von Wärmeleistung auf mehrere Wärmeerzeuger des Erzeugerkreises und über ein Modul zur Steuerung der Vorlauftemperatur eines Wärmeerzeugers, zur Steuerung einer zugehörigen Pumpe und eines zugehörigen Ventils zur Anhebung der Rücklauftemperatur des Wärmeerzeugers verfügt.

Die vorliegende Erfindung kann auch im Form eines Computerprogramms realisiert werden. Diesbezüglich wird im Rahmen der Erfindung ausgehend von einem Computerprogramm zur Abarbeitung auf einem Rechengerät, insbesondere auf einem Prozessor, einer Steuerungs- und/oder Regelungseinrichtung eines Systems zum Transport thermischer Energie vorgeschlagen, dass das Programm zur Ausführung eines Verfahrens nach einem der Ansprüche 1 bis 14 programmiert ist, wenn das Programm auf dem Rechengerät abläuft.

Ein bevorzugtes Ausführungsbeispiel der vorliegenden Erfindung wird nachfolgend anhand der Figuren näher erläutert. Es zeigen:

Figur 1    eine schematische Darstellung der Datenflüsse zwischen Modulen, Funktionsgruppen und Funktionen der erfindungsgemäßen Steuerung und/oder Regelung,

Figur 2    eine schematische Darstellung von Modulen und Datenflüssen im Rahmen einer Mehrkesselregelung mit interner Leistungsbegrenzung,

Figur 3    eine schematische Darstellung von Modulen und Datenflüssen im Rahmen einer Mehrkesselregelung mit externer Leistungsbegrenzung,

Figur 4    eine schematische Darstellung der Funktionsweise eines Moduls "Leistungsregler" mit interner Leistungsbegrenzung,

Figur 5    eine schematische Darstellung der Funktionsweise eines Moduls "Leistungsregler" mit externer Leistungsbegrenzung,

Figur 6    eine schematische Darstellung der Funktionsweise eines Moduls "Folgesteuerung",

Figur 7    eine schematische Darstellung einer Funktionsgruppe "Temperatursteuerung" und mehrerer Funktionen innerhalb eines Moduls "Wärmeerzeugersteuerung" ohne Rücklauftemperaturanhebung,

Figur 8    eine schematische Darstellung der Funktionsgruppe "Temperatursteuerung" und mehrerer Funktionen innerhalb eines Moduls "Wärmeerzeugersteuerung" mit Rücklauftemperaturanhebung,

Figur 9    eine schematische Darstellung der Funktionen der Funktionsgruppe "Temperatursteuerung" innerhalb des Moduls "Wärmeerzeugersteuerung" mit Rücklauftemperaturanhebung,

Figur 10    eine schematische Darstellung der Berechnung von mehreren Funktionen "wärmeerzeugerspezifische Maximalleistung" und "interne Soll-Leistung",

Figur 11 eine schematische Darstellung der Berechnung einer Funktion "Interne Soll-Vorlauftemperatur" und einer Funktion "Verhältnisregler",

Figur 12 eine schematische Darstellung einer Funktion "Brenneransteuerung" mit modulierendem Brenner,

Figur 13 eine schematische Darstellung einer Funktion "Brenneransteuerung" mit stufigem Brenner,

Figur 14 eine schematische Darstellung einer Funktion "Pumpenansteuerung" für Wärmeerzeuger mit Rücklauftemperaturanhebung,

Figur 15 eine schematische Darstellung einer Funktion "Pumpenansteuerung" für Wärmeerzeuger ohne Rücklauftemperaturanhebung,

Figur 16 eine schematische Darstellung einer Funktion "Rücklauftemperaturanhebung" mit Volumenstromreduzierung,

Figur 17 eine schematische Darstellung einer Funktion "Volumenstromreduzierung",

Figur 18 ein dreidimensionales pumpenspezifisches Kennlinienfeld.

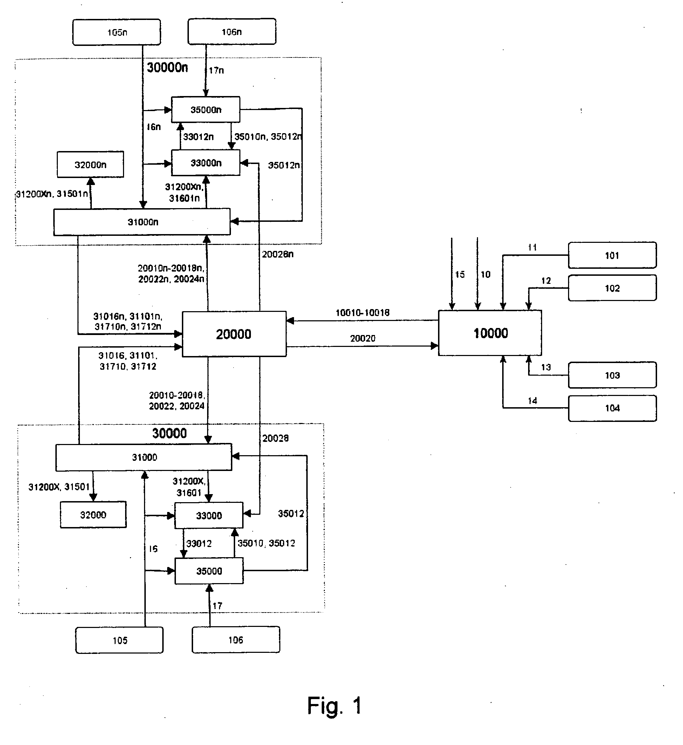

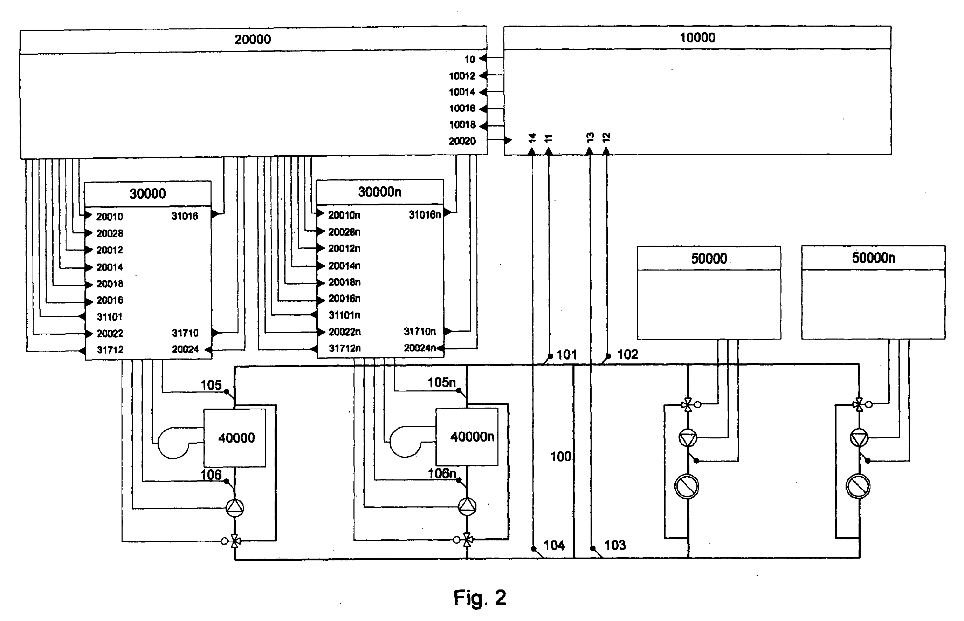

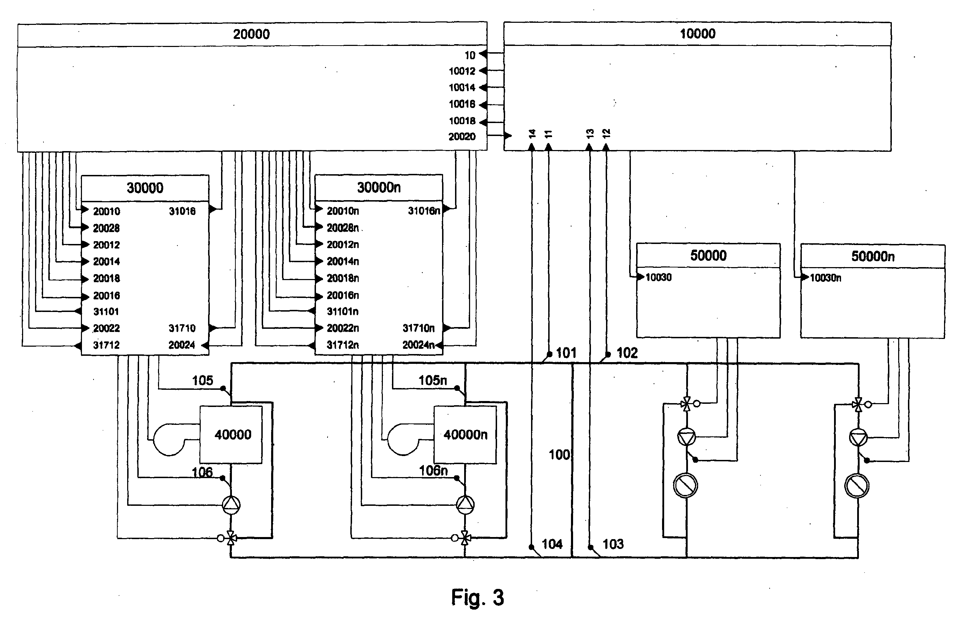

Figur 1 zeigt als schematische Darstellung eine Übersicht über Module mit Funktionsgruppen und Funktionen zur Regelung bzw. Steuerung einer verbraucherseitigen Vorlauftemperatur 12. Sie umfasst ein Modul "Leistungsregler" 10000, ein Modul "Folgesteuerung" 20000, mehrere Module "Wärmeerzeugersteuerung" 30000 bis 30000n sowie Temperatursensoren zur Erfassung von erzeugerseitigen und verbraucherseitigen Vorlauf- und Rücklauftemperaturen 11 bis 14. Die Figuren 2 und 3 geben eine detaillierte schematische Darstellung der Datenflüsse zwischen den einzelnen Modulen wieder.

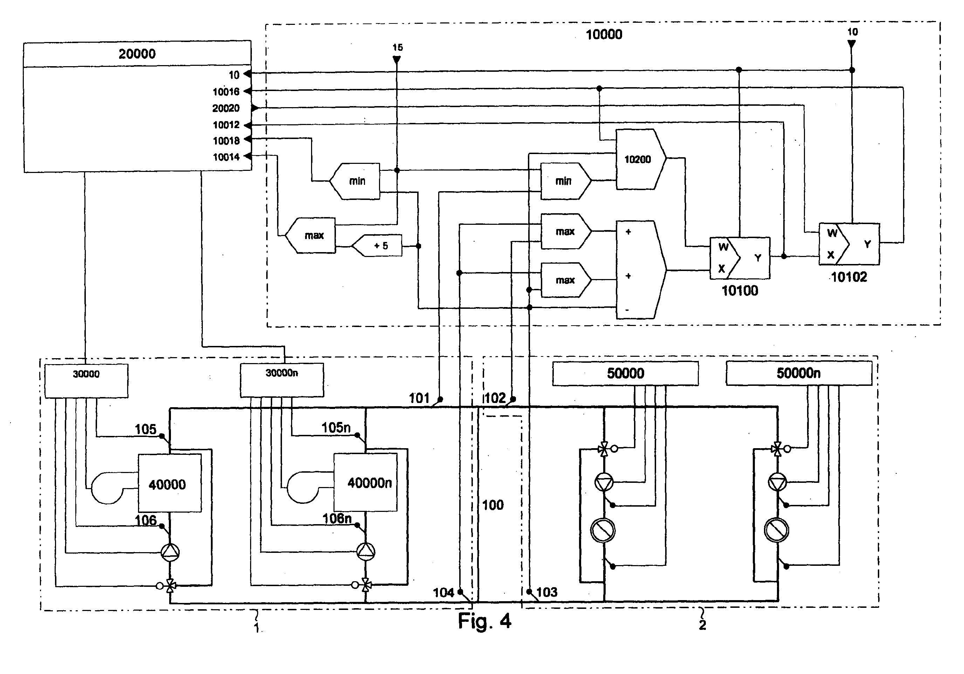

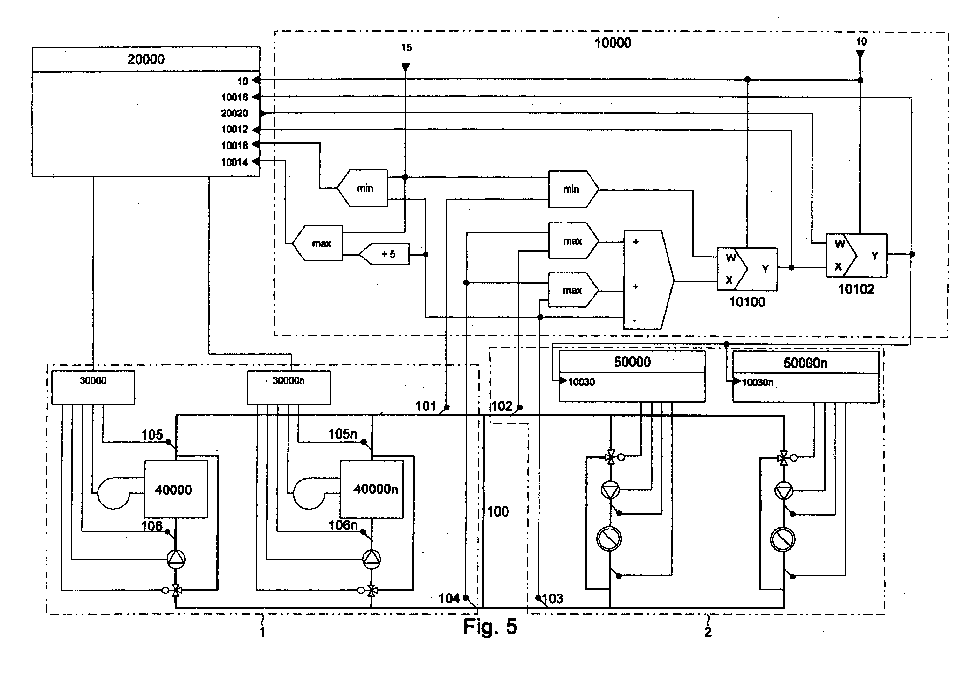

Die Figuren 4 und 5 zeigen einen Erzeugerkreis 1 und einen Verbraucherkreis 2 sowie eine detaillierte Darstellung der Funktionsweise des Moduls "Leistungsregler" 10000. Aufgabe des Moduls "Leistungsregler" 10000 ist es, dem Verbraucherkreis 2 eine benötigte Heizwassermenge mit einer vorgegebenen verbraucherseitigen Vorlauftemperatur 15 zur Verfügung zu stellen. Der Leistungsregler 10000 regelt an einem hydraulischen Entkoppler 100 die verbraucherseitige Vorlauftemperatur 12. Zu diesem Zweck erfasst das Modul "Leistungsregler" 10000 mit Hilfe von Temperatursensoren 101 bis 104 zunächst die erzeugerseitigen und verbraucherseitigen Vorlauf- und Rücklauftemperaturen 11 bis 14. Dabei misst der Temperatursensor 101 die erzeugerseitige Vorlauftemperatur 11, der Temperatursensor 102 die verbraucherseitige Vorlauftemperatur 12, der Temperatursensor 103 die verbraucherseitige Rücklauftemperatur 13 und der Temperatursensor 104 die erzeugerseitige Rücklauftemperatur 14. Im Modul "Leistungsregler" 10000 integrierte logische Funktionen ermöglichen in Zusammenwirken mit in den Modulen "Wärmeerzeugersteuerung" 30000 bis 30000n enthaltenen Funktionen eine gezielte Beimischung des kälteren verbraucherseitigen Rücklauf-Volumenstroms über den hydraulischen Entkoppler 100 zum wärmeren erzeugerseitigen Vorlauf-Volumenstrom. Durch eine solche Beimischung wird die verbraucherseitige Vorlauftemperatur 12 bei einer vorgegebenen Wärmeleistung der Verbraucher verringert. Das Modul "Leistungsregler" 10000 wertet die von den Temperatursensoren 101 bis 104 erfassten Temperaturwerte 11 bis 14 nach einem bestimmten Verfahren aus und bildet eine Stellgröße für die von zumindest einem Wärmeerzeuger zu erzeugende Gesamt-Wärmeleistung 10012. Im Rahmen der Ermittlung der Stellgröße 10012 wird berücksichtigt, dass der Wert der Stellgröße 10012 die von den Wärmeerzeugern insgesamt zur Verfügung stellbare maximale Gesamt-Wärmeleistung 20020 nicht überschreiten darf (sog. integrierte interne bzw. externe Leistungsbegrenzung), und es wird verhindert, dass die Stellgröße 10012 die maximal zur Verfügung stellbare Wärmeleistung übersteigt.

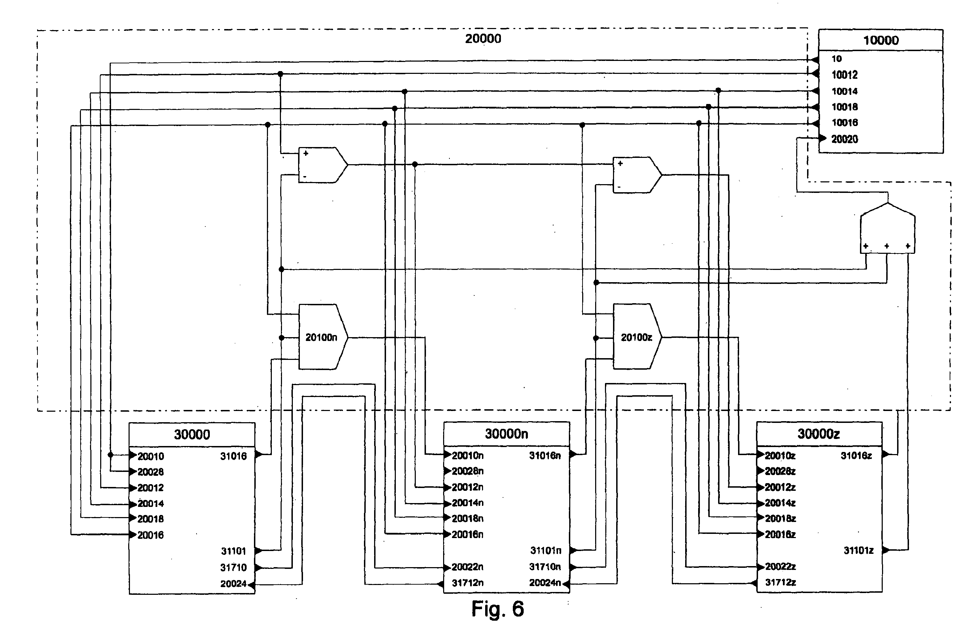

Die Figur 6 zeigt eine detaillierte Darstellung der Funktionsweise eines Moduls "Folgesteuerung" 20000. Die Aufgabe des Moduls "Folgesteuerung" 20000 besteht darin, die von den Wärmeerzeugern bereitzustellende Wärmeleistung auf die einzelnen Wärmeerzeuger zu verteilen. Die Folgesteuerung 20000 bestimmt die frei definierbare Reihenfolge, in der die einzelnen Wärmeerzeuger freigegeben werden und verteilt eine zu erzeugende Gesamt-Wärmeleistung 20012 auf die in Betrieb befindlichen Wärmeerzeuger. Die Wärmeleistung soll dabei so verteilt werden, dass die Wärmeerzeuger möglichst mit ihrem optimalen Wirkungsgrad betrieben werden. Im Rahmen der Aktivierung der einzelnen Wärmeerzeuger erfolgt dabei zunächst eine Freigabe eines sog. Führungskessels, um ein undefiniertes Verhalten des Leistungsreglers beim Anfahren der Wärmeerzeugers bzw. bei fehlendem Volumenstrom im Verbraucherkreis 2 zu verhindern.

Ein Modul "Wärmeerzeugersteuerung" 30000 umfasst eine Funktionsgruppe "Temperatursteuerung" 31000 sowie mehrere Funktionen "Brenneransteuerung" 32000, "Pumpenansteuerung" 33000, "Volumenstromreduzierung" 34000 oder alternativ "Rücklauftemperaturanhebung" 35000. Die Aufgabe des Moduls "Wärmeerzeugersteuerung" 30000 besteht darin, eine Wärmequelle 40000, eine zugehörige Pumpe und ein Ventil für die "Rücklauftemperaturanhebung" 35000 bzw. "Volumenstromreduzierung" 34000 anzusteuern. Das Modul "Wärmeerzeugersteuerung" 30000 steuert die Leistung der Wärmequelle (sog. Brennerleistung) und die Pumpleistung.

Die Figuren 2 bis 6 zeigen zudem detailliert die Datenflüsse zwischen den oben angeführten Modulen sowie die Berechnungsvorgänge, die für die Anforderung einer bestimmten Wärmeleistung von einem Wärmeerzeuger notwendig sind. Diese werden nachfolgend näher beschrieben:

Zunächst übergibt jede Wärmeerzeugersteuerung 30000 bis 30000n an das Modul "Folgesteuerung" 20000 als Parameter seine jeweils abgebbare, wärmeerzeugerspezifische Maximalleistung 31101 bzw. 31101n, die seine zugehörige Wärmequelle 40000 bzw. 40000n abgeben kann. Die jeweiligen wärmeerzeugerspezifischen Maximalleistungen 31101 bis 31101n werden in dem Modul "Folgesteuerung" 20000 addiert und von diesem als maximale Gesamtleistung 20020 der in Betrieb befindlichen Wärmeerzeuger an das Modul "Leistungsregler" 10000 übergeben. Als weitere Eingangsparameter erhält das Modul "Leistungsregler" 10000 die bereits oben beschriebenen Temperaturwerte: die erzeugerseitige Vorlauftemperatur 11, die verbraucherseitige Vorlauftemperatur 12, die verbraucherseitige Rücklauftemperatur 13 und die erzeugerseitige Rücklauftemperatur 14. Als zusätzlicher Eingangsparameter wird eine vorgegebene verbraucherseitige Vorlauftemperatur 15 übergeben. Zudem erhält das Modul "Leistungsregler" 10000 ein allgemeines Signal Freigabe Wärmeerzeugung 10, welches auch an das Modul "Folgesteuerung" 20000 weiterübermittelt wird.

Die Weiterverarbeitung der maximalen Gesamtleistung 20020 im Modul "Leistungsregler" 10000 ist den Figuren 4 und 5 entnehmbar. Das Modul "Leistungsregler" 10000 vergleicht die vorgegebene verbraucherseitige Vorlauftemperatur 15 mit der erzeugerseitigen Vorlauftemperatur 11 und ermittelt aus der Differenz das Stellsignal für die benötigte, von den Wärmeerzeugern insgesamt zu erzeugende Wärmeleistung 10012. Zu diesem Zweck verfügt das Modul über zwei Regler 10100 und 10102. Als sogenannter interner Leistungsregler 10100 kommt vorzugsweise ein PI-Regler zum Einsatz. In Figur 5 erzeugt der Regler 10100 als Stellgröße Y die insgesamt zu erzeugende Wärmeleistung 10012 mit einer Führungsgröße W, die als kleinerer Wert von der vorgegebenen verbraucherseitigen Vorlauftemperatur 15 und der erzeugerseitigen Vorlauftemperatur 11 hervorgeht und mit einer Regelgröße X, die aus der Summe des größeren Werts der erzeugerseitigen Rücklauftemperatur 14 und der verbraucherseitigen Vorlauftemperatur 12 sowie der erzeugerseitigen Rücklauftemperatur 14 und der verbraucherseitigen Rücklauftemperatur 13 abzüglich des letzteren Signals 13 hervorgeht. Als Führungsgröße wird dabei stets ein Minimalwert ermittelt, um zu verhindern, dass der Sollwert des Leistungsreglers größer ist als die erzeugerseitige Vorlauftemperatur 11. Durch diese logischen Verknüpfungen der Temperatursignale wird bei allen Temperatur- und Volumenverhältnissen eine stabile Leistungsregelung der Wärmeerzeuger sichergestellt. Zudem wird eine konstante verbraucherseitige Vorlauftemperatur gewährleistet, eine Rücklauftemperaturanhebung findet nicht statt und ein unkontrollierter Anstieg der Stellgröße Y des Leistungsreglers 10100 erfolgt nicht, wenn die vorgegebene verbraucherseitige Vorlauftemperatur 15 größer ist als die erzeugerseitige Vorlauftemperatur 11.

Der Regler 10102 fungiert als Begrenzungsregler, der die von der Folgesteuerung 20000 übergebene maximale Gesamtleistung 20020 mit dem Stellsignal des Leistungsreglers 10000 vergleicht. Überschreitet der Wärmebedarf im Verbrauchernetz die von den Wärmeerzeugern bereitgestellte maximale Gesamtleistung 20020, so spricht der Begrenzungsregler 10102 an. Der Begrenzungsregler 10102 erhält als Führungsgröße W die maximale Gesamtleistung 20020 und als Regelgröße X die vom internen Leistungsregler 10100 generierte zu erzeugende Wärmeleistung 20012. Wird die maximale Gesamtleistung 20020 vom internen Leistungsregler 10100 überschritten, kann das Modul "Leistungsregler" 10000 mit zwei Optionen reagieren: Im Rahmen der externen Leistungsbegrenzung überträgt das Modul "Leistungsregler" 10000 an die Heizkreisregler 50000 bis 50000n ein entsprechendes leistungsbegrenzendes Signal Externe Leistungsreduzierung 10030. Als Folge sinkt die von den Wärmeverbrauchern angeforderte Leistung und infolgedessen sinkt automatisch auch die von den Wärmeerzeugern zu erzeugende Gesamtleistung, bis die vom internen Leistungsregler 10100 erzeugte Stellgröße 10012 der maximalen Gesamtleistung 20020 entspricht. Ist diese Möglichkeit nicht realisierbar, wird alternativ die Führungsgröße W des Leistungsreglers 10100 von der Verarbeitungseinheit 10200 solange stetig abgesenkt, bis die vom internen Leistungsregler 10100 erzeugte Stellgröße 10012 der maximalen Gesamtleistung 20020 entspricht.

Im Rahmen der Berechnungen des Moduls "Leistungsregler" wird auch eine errechnete verbraucherseitige Rücklauftemperatur 10018 generiert. Dieses Signal 10018 wird mittels einer Minimalauswahl aus der verbraucherseitigen Rücklauftemperatur 13 und der vorgegebenen verbraucherseitigen Vorlauftemperatur 15 ermittelt. Durch die Minimalauswahl wird verhindert, dass die verbraucherseitige Rücklauftemperatur 13 bei fehlendem verbraucherseitigem Durchfluss auf einen Wert ansteigt, der zu unlogischen Anlagenzuständen führt.

Außerdem wird ein errechneter Sollwert 10014 der erzeugerseitigen Vorlauftemperatur erzeugt, der mittels einer Maximalauswahl aus der vorgegebenen verbraucherseitigen Vorlauftemperatur 15 und der verbraucherseitigen Rücklauftemperatur 13 zuzüglich eines einstellbaren Offsets, in den Figuren 4 und 5 der Wert +5, gebildet wird. Durch den Offset wird verhindert, dass die Temperaturdifferenz zwischen der errechneten erzeugerseitigen Soll-Vorlauftemperatur 10014und der verbraucherseitigen Rücklauftemperatur 13 unter ein sinnvolles Niveau fällt.

Die im Modul "Leistungsregler" 10000 generierte Stellgröße für die zu erzeugende Gesamt-Wärmeleistung 10012 und das Stellsignal des Begrenzungsreglers zur Leistungsbegrenzung 10016 werden zusammen mit dem errechneten Sollwert 10014 der erzeugerseitigen Vorlauftemperatur und der errechneten verbraucherseitigen Rücklauftemperatur 10018 an das Modul "Folgesteuerung" 20000 übergeben. Ein Signal Freigabe Wärmeerzeugung 10 wird direkt an das Modul "Folgesteuerung" 20000 übergeben.

Figur 6 zeigt Details der Datenflüsse und Berechnungsvorgänge im Modul "Folgesteuerung" 20000. Im Modul "Folgesteuerung" 20000 werden Daten für die Wärmeerzeuger übertragen und aufbereitet. Nachfolgend erfolgt die Ermittlung und Übertragung von Parametern mit einem Additiv "n" oder "z" analog den Parametern ohne ein Additiv, es sei denn, für die Parameter mit Additiv werden im Text andere Verfahrensschritte explizit angegeben.

Wenn das Modul "Leistungsregler" 10000 die Wärmeerzeugeranlage anfordert, erfolgt zunächst die Freigabe eines einzelnen Wärmeerzeugers durch die Folgesteuerung 20000 als sog. Führungskessel. Dazu erhält der Wärmeerzeuger eine Freigabe 20010 und ein Signal zum Betrieb als Führungskessel 20028. Der Betrieb als Führungskessel bewirkt einen erzeugerseitigen Mindestvolumenstrom, wodurch Anlagenzustände verhindert werden, die beim Anfahren der Wärmeerzeugeranlage bzw. bei fehlendem Volumenstrom im Verbraucherkreis 2 zu einem undefinierten Verhalten des Moduls "Leistungsregler" 10000 führen würden.

Im Gegensatz zum Führungskessel werden die weiteren Wärmeerzeuger durch einzelne Verarbeitungseinheiten freigegeben. Der Betrieb weiterer Wärmeerzeuger, insbesondere Kessel, richtet sich nach der vom Modul "Leistungsregler" 10000 angeforderten zu erzeugenden Gesamt-Wärmeleistung 10012. Eine Freigabe 20010n bzw. 20010z des jeweils nachfolgenden Wärmeerzeugers erfolgt durch die jeweilige Verarbeitungseinheit 20100n bzw. 20100z, wenn die angeforderte Wärmeleistung 10012 die maximale Gesamtleistung 20020, die alle in Betrieb befindlichen Wärmeerzeuger insgesamt zur Verfügung stellen können, überschreitet. In diesem Fall bewirkt ein aktives Signal Leistungsbegrenzung 10016 in Zusammenwirken mit einer Betriebsmeldung, die aus dem Signal wärmeerzeugerspezifische Maximalleistung 31101 bzw. 31101n des vorhergehenden Wärmeerzeugers generiert wird, das Freischalten des nachfolgenden Wärmeerzeugers nach einer einstellbaren Zeitverzögerung. Alternativ wird auch im Fall einer Störung mittels eines Störungssignals 31016 der jeweils nächstfolgende Wärmeerzeuger freigegeben.

Die Wärmeleistung kann grundsätzlich variabel auf die in Betrieb befindlichen Wärmeerzeuger verteilt werden. Alternativ kann die Wärmeleistung auch mittels eines speziellen Kesselfolgemanagements auf die einzelnen Wärmeerzeuger derart verteilt werden, dass die Wärmeerzeuger jeweils mit ihrem maximalen Wirkungsgrad bzw. wirkungsgradoptimiert betrieben werden. Auf diese Weise lassen sich niedrigstmögliche Brennstoffkosten erzielen. In Figur 6 wird die zu erzeugende Wärmeleistung folgendermaßen auf die dem Führungskessel nachgeschalteten Wärmeerzeuger verteilt: Einem Wärmeerzeuger wird als zu erzeugende Wärmeleistung 20012 die zu erzeugende Leistung 10012 des Leistungsreglers 10000 abzüglich der von den vorgeschalteten Wärmeerzeugern bereitgestellten maximalen Wärmeleistung zugeteilt. Liegt die noch benötigte Wärmeleistung für einen Wärmeerzeuger bei 0 kW bzw. im negativen Bereich, wird dieser nach einer einstellbaren Zeitverzögerung wieder gesperrt.

Sämtliche Wärmeerzeuger erhalten direkt und ohne weitere Berechnungsschritte im Modul "Folgesteuerung" 20000 vom Modul "Leistungsregler" 10000 den errechneten Sollwert 10014, 20014 der verbraucherseitigen Vorlauftemperatur und die errechnete verbraucherseitige Rücklauftemperatur 10018, 20018. Es kann sinnvoll sein, dass Wärmeerzeuger die Leistung, mit der sie jeweils betrieben werden, nicht (nur) mittels eines übergeordneten Kesselfolgemanagementsystems zugewiesen bekommen, sondern auch untereinander abstimmen können. Beispielsweise soll dadurch vermieden werden, dass sich ein Wärmeerzeuger zyklisch ein- und ausschaltet, weil die ihm zugewiesene noch benötigte Wärmeleistung unterhalb seiner Minimalleistung liegt. Zu diesem Zweck verfügt beispielsweise jede Wärmeerzeugersteuerung 30000 über eine Funktionalität zur Leistungsanhebung 20022, 31710 und Leistungsreduzierung 20024, 31712, die jeweils zwischen in der Wärmeerzeugerfolge benachbarten Wärmeerzeugern Signale austauscht. Dabei überträgt ein Wärmeerzeuger an seinen jeweils vorgelagerten Wärmeerzeuger die Differenz zwischen der aktuell von ihm angeforderten Wärmeleistung und seiner minimalen Wärmeerzeugerleistung. Im Gegenzug überträgt der vorgelagerte Wärmeerzeuger an den jeweils nachfolgenden Wärmeerzeuger, um welchen Betrag dieser seine Leistung erhöhen darf.

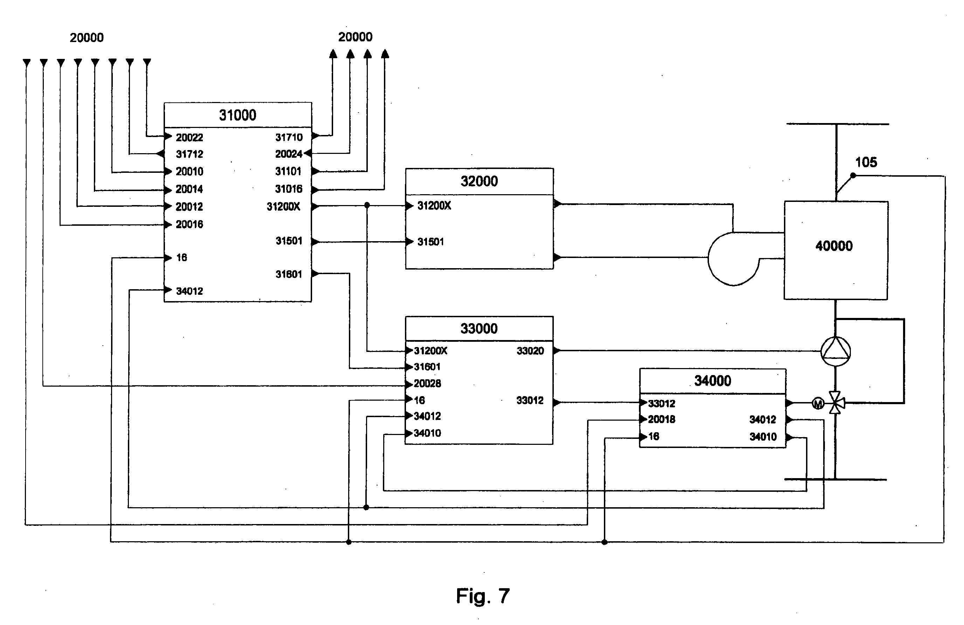

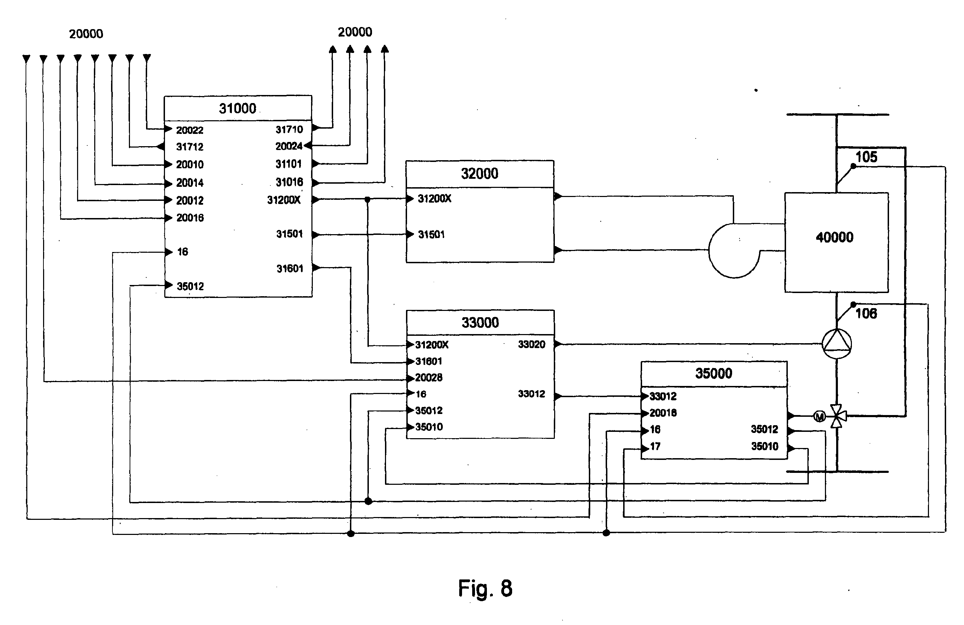

Einen detaillierten Überblick über die Datenflüsse innerhalb eines Moduls "Wärmeerzeugersteuerung" 30000 geben die Figuren 7 und 8. Neben den bekannten Datenflüssen von und nach der Folgesteuerung 20000 finden hier weitere Datenflüsse zu und von der Funktionsgruppe "Temperatursteuerung" 31000 sowie zu und von den Funktionen "Brenneransteuerung" 32000, "Pumpenansteuerung" 33000 und "Volumenstromreduzierung" 34000 bzw. "Rücklauftemperaturanhebung" 35000 statt.

Die Funktionsgruppe "Temperatursteuerung" 31000 ist von zentraler Bedeutung für das Modul "Wärmeerzeugersteuerung" 30000, da hier ein Großteil der Signale, die zwischen den Modulen "Folgesteuerung" 20000 und "Wärmeerzeugersteuerung" 30000 ausgetauscht werden, ausgewertet bzw. erzeugt werden. Die wesentliche Aufgabe der Funktionsgruppe "Temperatursteuerung" 31000 besteht darin, eine Vorlauftemperatur 16 des zugehörigen Wärmeerzeugers, gemessen von einem Temperatursensor 105, gemäß dem vom Modul "Folgesteuerung" 20000 vorgegebenen errechneten Sollwert der verbraucherseitigen Vorlauftemperatur 20014 auszuregeln.

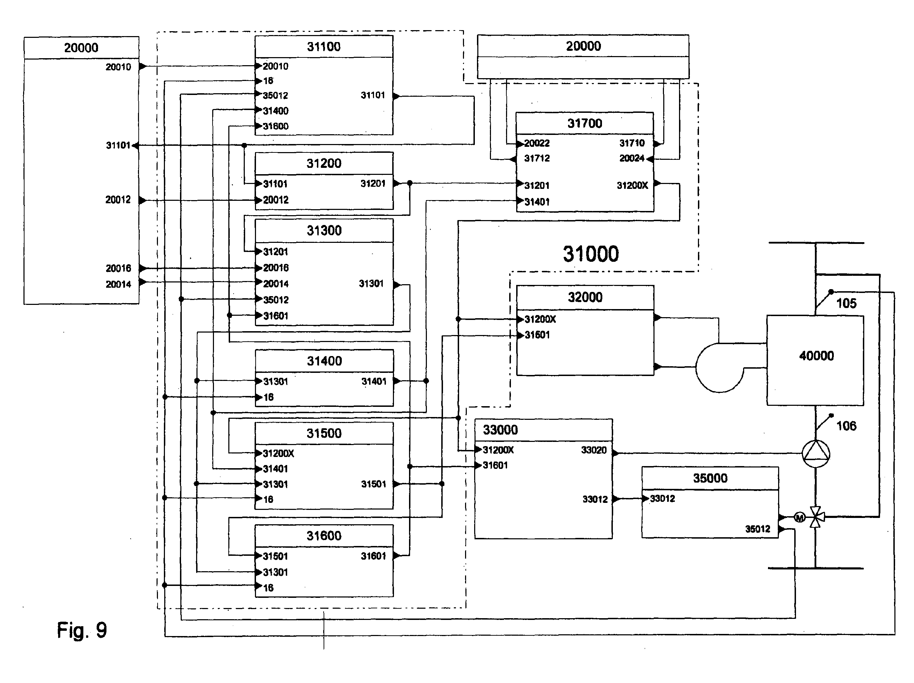

Die Figuren 9 bis 11 zeigen detailliert die Funktionen der Funktionsgruppe "Temperatursteuerung" 31000, deren Aufgaben und Funktionsweise nachfolgend näher erläutert wird:

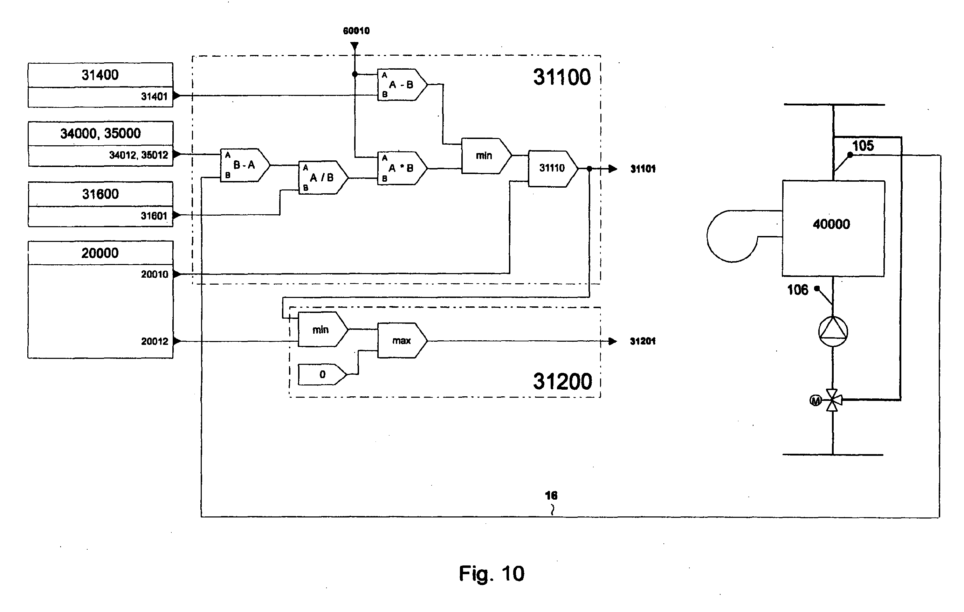

Eine erste Funktion der Funktionsgruppe "Temperatursteuerung" 31000 hat die Aufgabe, eine vom Wärmeerzeuger bereitgestellte, wärmeerzeugerspezifische Maximalleistung 31101 zu berechnen und an das Modul "Folgesteuerung" 20000 zu übermitteln. Diese Aufgabe übernimmt eine Funktion "wärmeerzeugerspezifische Maximalleistung" 31100. Der Stellwert 31101 der Funktion "wärmeerzeugerspezifische Maximalleistung" 31100 entspricht dabei nicht zwangsläufig der Nennleistung des Wärmeerzeugers. Vielmehr erfolgt die Ermittlung des Stellwerts wärmeerzeugerspezifische Maximalleistung 31101 eines Wärmeerzeugers nach dem in Figur 10 dargestellten Berechnungsverfahren und ist abhängig von den Funktionen "Verhältnisregler" 31600, "Temperier-Offset" 31400 sowie einem Parameter erzeugerseitige Soll-Rücklauftemperatur 35012 der Funktion "Rücklauftemperaturanhebung" 35000 sowie der Nennleistung 60010 der Wärmequelle.

Die wärmeerzeugerspezifische Maximalleistung 31101 des Wärmeerzeugers wird nach zwei Verfahren ermittelt. Im ersten Verfahren wird eine Maximalleistung in Abhängigkeit eines Temperier-Offset 31401 ermittelt, indem von der Nennleistung 60010 der Wärmequelle der Temperier-Offset 31401 subtrahiert wird. Im zweiten Verfahren wird eine Maximalleistung in Abhängigkeit der Stellgröße 31601 des "Verhältnisreglers" 31600 (wird auch als Verhältnis 31601 bezeichnet) ermittelt, indem die Temperaturdifferenz zwischen der erzeugerseitigen Soll-Rücklauftemperatur 35012 und der Vorlauftemperatur 16 des Wärmeerzeugers, gemessen durch den Temperatursensor 105, durch die Stellgröße Verhältnis 31601 dividiert und das Ergebnis mit der Nennleistung 60010 des Wärmeerzeugers multipliziert wird. Die wärmeerzeugerspezifische Maximalleistung 31101 entspricht jeweils dem niedrigeren Wert der nach den Verfahren eins und zwei ermittelten Maximalleistungen.

Ist der Wärmeerzeuger gesperrt, wird das Signal wärmeerzeugerspezifische Maximalleistung 31101 des Wärmeerzeugers durch die Verarbeitungseinheit 31110 auf Null gesetzt, die Pumpe abgeschaltet und die in der Wärmeerzeugersteuerung 30000 vorhandenen Regler auf ihre Stellgröße zum Zeitpunkt der Abschaltung festgesetzt. Wird der Wärmeerzeuger freigegeben, wird die Vorlauftemperatur 16 des Wärmeerzeugers durch Einschalten der zugehörigen Wärmequelle zunächst auf den Sollwert angehoben. Ist die vorgegebene verbraucherseitige Vorlauftemperatur 15 erreicht, wird die Begrenzung der wärmeerzeugerspezifischen Maximalleistung 31101 auf Null aufgehoben und der Wärmeerzeuger geht in den Regelbetrieb.

Die Aufgabe einer zweiten Funktion "Interne Soll-Leistung" 31200 der Funktionsgruppe "Temperatursteuerung" 31000 aus Figur 9 besteht darin, ein Stellsignal 31201 zur Ansteuerung der Wärmequelle 40000 und der zugehörigen Pumpe bereitzustellen. Dieses Stellsignal 31201 ist so zu begrenzen, dass die interne Soll-Leistung nicht kleiner Null und nicht größer als die wärmeerzeugerspezifische Maximalleistung 31101 des Wärmeerzeugers sein kann. Nach Figur 10 berechnet sich die interne Soll-Leistung 31201 gemäß dem Maximum von Null und einer Minimal-Auswahl aus der wärmeerzeugerspezifischen Maximalleistung 31101 und der zu erzeugenden Gesamt-Wärmeleistung 20012.

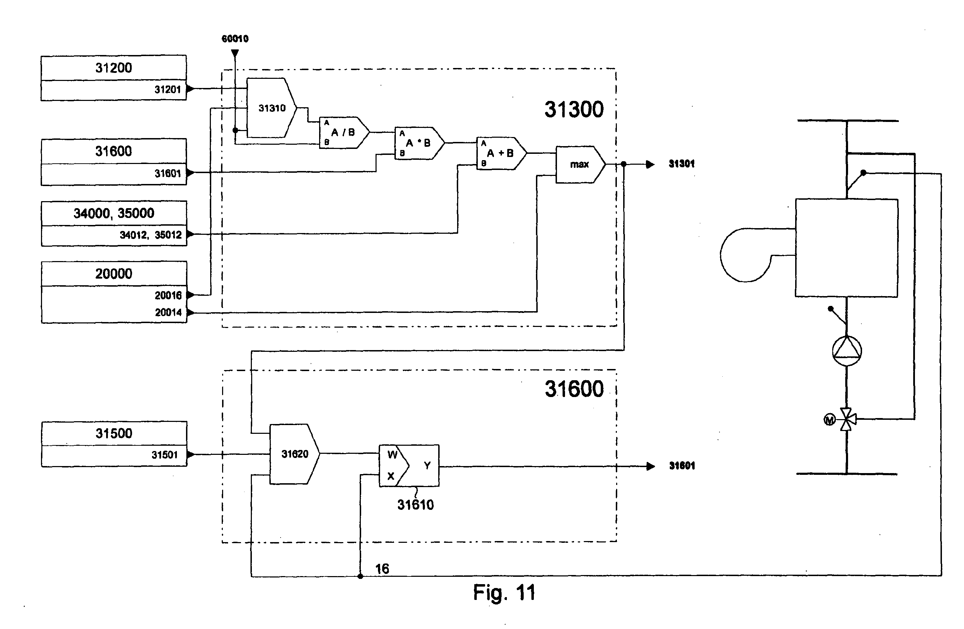

Damit die von einem Wärmeerzeuger erzeugte Wärmeleistung vollständig an das Erzeugernetz abgegeben werden kann, muss die Temperaturdifferenz zwischen der Vorlauftemperatur 16 und einer Rücklauftemperatur 17 des Wärmeerzeugers proportional zu einer internen Soll-Leistung 31201 sein. Das bedeutet insbesondere, dass die Temperaturdifferenz hinreichend groß sein muss, da ansonsten die Förderleistung der Pumpe nicht ausreicht, um den erforderlichen Volumenstrom zur Verfügung zu stellen. Es ist daher die Aufgabe einer dritten Funktion "interne Soll-Vorlauftemperatur" 31300 der Funktionsgruppe "Temperatursteuerung" 31000, eine minimale interne Soll-Vorlauftemperatur 31301 zu berechnen um sicherzustellen, dass die maximale Fördermenge der Pumpe ausreicht, um die Wärmeleistung des Wärmeerzeugers in das Erzeugernetz abzugeben. Die Berechnung dieser minimalen internen Soll-Vorlauftemperatur 31301 ist in Figur 11 dargelegt. Sie erfolgt in Abhängigkeit der Nennleistung 60010 der Wärmequelle, der internen Soll-Leistung 31201, der Stellgröße 31601 des Verhältnisreglers 31600, der erzeugerseitigen Soll-Rücklauftemperatur 35012 sowie der Leistungsbegrenzung 20016. Im Falle eines Ansprechens der Leistungsbegrenzung 20016 wird von der Verarbeitungseinheit 31310 das Signal interne Soll-Leistung 31201 auf die Nennleistung 60010 der Wärmequelle gesetzt. Der Grund für diese Funktion wird weiter unten beschrieben. Das von der soeben beschriebenen Verarbeitungseinheit 31310 generierte Signal wird durch die Nennleistung der Wärmequelle 60010 dividiert und das Ergebnis der Division mit dem Verhältnis 31601 multipliziert. Das Produkt entspricht der minimal benötigten Temperaturdifferenz zwischen Vor- und Rücklauf des Wärmeerzeugers, bei der die Pumpe in der Lage ist, die geforderte Wärmeleistung an das Erzeugernetz abzugeben. Wird zu dieser minimalen Temperaturdifferenz die erzeugerseitige Soll-Rücklauftemperatur 35012 addiert, ergibt dies eine minimale Erzeuger-Vorlauftemperatur. Die interne Soll-Vorlauftemperatur 31301 wird mittels einer Maximalauswahl aus der minimalen Erzeuger-Vorlauftemperatur und dem seitens der Folgesteuerung 20000 übermittelten errechneten Sollwert 20014 der verbraucherseitigen Vorlauftemperatur ermittelt.

Um zu verhindern, dass sich die Berechnung der wärmeerzeugerspezifischen Maximalleistung 31101 des Wärmeerzeugers und die Berechnung der internen Soll-Vorlauftemperatur 31301 gegenseitig blockieren, wird die angeforderte Wärmeleistung 20012 für die Berechnung der internen Soll-Vorlauftemperatur 31301 bei Ansprechen des Begrenzungsreglers 10102 im Modul "Leistungsregler" 10000 auf die Nennleistung der Wärmequelle gesetzt. So wird verhindert, dass der Wärmeerzeuger aufgrund einer zu niedrigen Temperaturdifferenz zwischen Erzeugervor- und -rücklauf des einzelnen Wärmeerzeugers nicht mit seiner Nennleistung betrieben werden kann.

Die vierte in Figur 9 abgebildete Funktion "Temperier-Offset" 31400 der Funktionsgruppe "Temperatursteuerung" 31000 dient dazu, die Vorlauftemperatur 16 des Wärmeerzeugers zu beeinflussen. Die Stellgröße Temperier-Offset 31401 wird verwendet, wenn das Ausregeln der Vorlauftemperatur 16 des Wärmeerzeugers mittels der Stellgröße Verhältnis 31601 aufgrund größerer Sollwertabweichungen der Vorlauftemperatur 16 des Wärmeerzeugers zu großen Schwankungen der Stellgröße Verhältnis 31601 führen würde. Der Temperier-Offset 31401 dient dazu, größere Sollwertabweichungen durch eine Änderung der Leistung der Wärmequelle auszugleichen, bis der Wärmeerzeuger seine Soll-Vorlauftemperatur erreicht hat. Wird die Soll-Vorlauftemperatur des Wärmeerzeugers um einen einstellbaren Wert unterschritten, wird die Leistung der Wärmequelle mittels des positiven Temperier-Offsets 31401 erhöht. Wird die Soll-Vorlauftemperatur des Wärmeerzeugers um einen einstellbaren Wert überschritten, wird die Leistung der Wärmequelle mittels des negativen Temperier-Offsets 31401 verringert. Ist die Soll-Vorlauftemperatur erreicht, wird der Temperier-Offset 31400 wieder auf Null gesetzt. Die interne Soll-Leistung 31201 des Wärmeerzeugers bleibt jeweils unverändert. Minimalwert bzw. Maximalwert des Temperier-Offsets 31401 können frei eingestellt werden. Der Temperier-Offset 31401 wird von der Temperatur-Steuerung nicht separat ausgegeben, sondern in einen nachfolgend beschriebenen Offset Wärmequelle 31501 eingerechnet.

Eine fünfte Funktion "Offset Wärmequelle" 31500 der Funktionsgruppe "Temperatursteuerung" 31000 mit der Stellgröße 31501 betrifft stufig steuerbare Wärmequellen, beispielsweise Öl- oder Gasbrenner, die nur in fest vorgegebenen Leistungsstufen steuerbar sind oder eine Grundlast haben, von der aus die Leistung stufenlos bis 100 % angehoben werden kann. Da ein Signal modifizierte interne Soll-Leistung 31200X stetig ist, kann dieses bei stufig bzw. stufig-stetig steuerbaren Wärmeerzeugern nicht direkt als Stellgröße für die Wärmeleistung genutzt werden. Die Funktionsgruppe "Temperatursteuerung" 31000 übergibt aus diesem Grund die Stellgröße Offset Wärmequelle 31501 an die Steuerung des Wärmeerzeugers, um die Differenz zwischen der modifizierten internen Soll-Leistung 31200X und einer für den jeweiligen Wärmeerzeuger möglichen Wärmeleistung auszugleichen. Dies wird anhand eines Beispiels näher erläutert:

Beträgt die Minimalleistung eines Wärmeerzeugers beispielsweise 100 kW und die modifizierte interne Soll-Leistung 31200X 75 kW, muss der Offset Wärmequelle 31501 +25 kW betragen. Überschreitet die Vorlauftemperatur 16 des Wärmeerzeugers die Soll-Vorlauftemperatur des Wärmeerzeugers um eine eingestellte Schalthysterese, muss die Leistung des Wärmeerzeugers auf eine Leistung niedriger als die modifizierte interne Soll-Leistung 31200X des Wärmeerzeugers eingestellt werden. Da die Leistung des Wärmeerzeugers aus obigem Beispiel mit 100 kW die Minimalleistung darstellt, wird der Wärmeerzeuger in diesem Fall mittels des negativen Offset Wärmequelle 31501 von -75 kW abgeschaltet. Infolgedessen sinkt die Vorlauftemperatur 16 des Wärmeerzeugers. Sobald die Vorlauftemperatur 16 des Wärmeerzeugers unter die Soll-Vorlauftemperatur fällt, wird der Offset Wärmequelle 31501 des Wärmeerzeugers wieder auf 25 kW gesetzt, der Heilvorgang beginnt erneut und die Vorlauftemperatur steigt wieder.

Für die Berechnung des Offset Wärmequelle 31501 wird zunächst die Summe aus der internen Soll-Leistung 31201 und dem Temperier-Offset 31401 gebildet. Kann die so berechnete Leistung an der Wärmequelle eingestellt werden, entspricht der Offset Wärmequelle 31501 dem Temperier-Offset 31401. Kann die berechnete Leistung nicht eingestellt werden, muss der Temperier-Offset 31401 entsprechend angepasst werden. In diesem Fall entspricht der Offset Wärmequelle 31501 dem sog. adaptierten Temperier-Offset 31401, der bis zum Erreichen der nächstmöglichen Leistungsstufe des Wärmeerzeugers adaptiert werden kann. Liegt die Vorlauftemperatur 16 des Wärmeerzeugers unter dem Sollwert, wird zur nächsthöheren Leistungsstufe des Wärmeerzeugers adaptiert. Wurde hingegen der Sollwert um einen einstellbaren Grenzwert überschritten, wird bis zum Unterschreiten der Soll-Vorlauftemperatur zur nächstmöglichen niedrigeren Leistungsstufe des Wärmeerzeugers adaptiert.

Als sechste Funktion der Funktionsgruppe "Temperatursteuerung" 31000 regelt die Stellgröße 31601 des Verhältnisreglers 31600 das Verhältnis von Pumpleistung zu Wärmequellenleistung. Seine Aufgabe ist es sicherzustellen, dass die Leistung der Wärmequelle und die Fördermenge der Pumpe im richtigen Verhältnis zueinander stehen. Der "Verhältnisregler" 31600 hat direkten Einfluss auf alle wichtigen Berechnungen, die im Modul "Wärmeerzeugersteuerung" 30000 vorgenommen werden. Seine Stellgröße 31601 verhält sich proportional zur Temperaturdifferenz, die sich zwischen Vor- und Rücklauf des Wärmeerzeugers bei Volllast der Wärmequelle und Maximaldrehzahl der Pumpe im Verharrungszustand ergibt. Auf Basis der Stellgröße Verhältnis 31601 wird die wärmeerzeugerspezifische Maximalleistung 31101 des Wärmeerzeugers und die interne Soll-Vorlauftemperatur 31301 berechnet. Der "Verhältnisregler" 31600 umfasst einen Regler 31610, der vorzugsweise als ein PI-Regler ausgebildet ist. Der Regler 31610 erhält eine von einer Verarbeitungseinheit 31620 ermittelte Soll-Vorlauftemperatur als Führungsgröße W, die von der Betriebsart der Temperatursteuerung 31000 des Wärmeerzeugers abhängt. Wechselt die Stellgröße 31501 der Funktion "Offset Wärmequelle" 31500 auf einen positiven bzw. negativen Wert, wird die aktuelle Vorlauftemperatur 16 des Wärmeerzeugers in einen Zwischenspeicher abgelegt. Ist die Soll-Leistung der Wärmequelle durch einen positiven Wert der Stellgröße 31501 der Funktion "Offset Wärmequelle" 31500 größer als die modifizierte interne Soll-Leistung 31200X, wird die Temperatur am Sollwert-Eingang des Reglers 31610 mittels einer Maximalauswahl aus der im Zwischenspeicher hinterlegten Vorlauftemperatur des Wärmeerzeugers und der aktuellen Vorlauftemperatur 16 des Wärmeerzeugers ermittelt. Ist die Soll-Leistung der Wärmequelle 40000 durch einen negativen Wert der Stellgröße 31501 der Funktion "Offset Wärmequelle" 31500 kleiner als der Wert modifizierte interne Soll-Leistung 31200X, wird die Temperatur am Sollwert-Eingang des Reglers 31610 mittels einer Minimalauswahl aus der im Zwischenspeicher hinterlegten Vorlauftemperatur und der aktuellen Vorlauftemperatur 16 des Wärmeerzeugers ermittelt. Beträgt die Stellgröße 31501 der Funktion "Offset Wärmequelle" 31500 Null, wird die Stellgröße 31301 der Funktion "interne Soll-Vorlauftemperatur" 31300 direkt auf den Sollwert-Eingang des Reglers 31610 geschaltet. Als Istwert X wird die aktuelle Vorlauftemperatur 16 des Wärmeerzeugers auf den Istwert-Eingang des Reglers 31610 geschaltet. Die Stellgröße des Reglers 31610 wird als die Stellgröße Verhältnis 31601 von der Funktion "Verhältnisregler" 31600 ausgegeben.

Das Stellsignal 31601 der Funktion "Verhältnisregler" 31600 teilt zudem der Pumpenansteuerung 33000 mit, wie hoch im aktuellen Betriebszustand des Wärmeerzeugers die Temperaturdifferenz im Verharrungszustand zwischen Wärmeerzeugervorlauf und Wärmeerzeugerrücklauf bei Nennleistung der Wärmequelle und maximaler Drehzahl der zugehörigen Pumpe ist.

Die siebte Funktion "Leistungsanhebung/Leistungsreduzierung" 31700 der Funktionsgruppe "Temperatursteuerung" 31000 dient dazu, ein zyklisches Ein- und Ausschalten des Wärmeerzeugers für den Fall, dass die zu erzeugende Wärmeleistung 20012 des Wärmeerzeugers unterhalb der Minimalleistung des Wärmeerzeugers liegt, zu verhindern. Liegt die zu erzeugende Wärmeleistung 20012 des Wärmeerzeugers unterhalb der Minimalleistung der Wärmequelle, muss diese üblicherweise in Abhängigkeit einer vorgegebenen Schalthysterese zyklisch ein- und ausgeschaltet werden. Um dies zu vermeiden, muss die modifizierte interne Soll-Leistung 31200X des Wärmerzeugers auf die Minimalleistung des Wärmeerzeugers, berechnet aus der Minimalleistung der Wärmequelle zuzüglich der Stellgröße 31501 der Funktion "Offset Wärmequelle" 31500, erhöht werden. Dafür muss im Gegenzug eine zu erzeugende Wärmeleistung 20012n eines anderen in Betrieb befindlichen Wärmeerzeugers verringert werden. Um diese Funktion zu realisieren, werden zwischen den in der Wärmeerzeugerfolge benachbarten Wärmeerzeugern jeweils zwei Signale ausgetauscht. Mit einem Signal Leistungsanhebung 31710, in der Folge 20022n, teilt ein Wärmeerzeuger dem in der Wärmeerzeugerfolge nachgelagerten Wärmeerzeuger über die Folgesteuerung 20000 mit, um welchen Betrag dieser seine modifizierte interne Soll-Leistung 31200X maximal anheben darf. Im Gegenzug teilt der nachgelagerte Wärmeerzeuger mit einem Signal Leistungsreduzierung 31712n, in der Folge 20024 dem vorgelagerten Wärmeerzeuger mit, um welchen Betrag der nachgelagerte Wärmeerzeuger seine interne Soll-Leistung 31200X angehoben hat. Der vorgelagerte Wärmeerzeuger muss seine interne Soll-Leistung 31200X um diesen Betrag reduzieren. Im Idealfall kann der vorgelagerte Wärmeerzeuger soweit in der Leistung reduziert werden, dass ein zyklisches Ein- und Ausschalten der Wärmequelle verhindert werden kann.

Um die Anzahl der Einschaltvorgänge der Wärmequelle so gering wie möglich zu halten, muss die an das Erzeugernetz abgegebene Leistung eines Wärmeerzeugers, der unterhalb seiner Minimal-Last betrieben wird, möglichst nahe der aktuellen Leistung der Wärmequelle sein. Liegt die Wärmeleistung der Wärmequelle über der modifizierten internen Soll-Leistung 31200X, steigt die Vorlauftemperatur des Wärmeerzeugers zwangsläufig an.

Damit der Offset Wärmequelle 31501 so gering wie möglich und somit der Anstieg der Vorlauftemperatur so langsam wie möglich ist, muss der Wärmeerzeuger den vorgelagerten Wärmeerzeuger in der Leistung reduzieren. Liegt die Wärmeleistung der Wärmequelle unter der Stellgröße 31201 der Funktion "interne Soll-Leistung" 31200, verringert sich die Vorlauftemperatur 16 des Wärmeerzeugers. Damit der Wert 31501 der Funktion "Offset Wärmequelle" 31500 so gering wie möglich und somit der Abfall der Vorlauftemperatur so langsam wie möglich ist, muss die interne Soll-Leistung 31201 des Wärmeerzeugers so niedrig wie möglich sein. Dies wird erreicht, indem vom vorgelagerten Wärmeerzeuger keine Wärmeleistung abgezogen wird. Die Reduzierung der Einschaltvorgänge der Wärmequelle wird also dadurch erreicht, dass bei einer zu hohen Wärmeleistung der Wärmequelle, das heißt, es wird mehr Energie als benötigt zur Verfügung gestellt, dem vorgelagerten Wärmeerzeuger Leistung entzogen wird, während bei einer zu niedrigen Wärmeleistung der Wärmequelle, das heißt, es wird weniger Energie zur Verfügung gestellt als angefordert, dem vorgelagerten Wärmeerzeuger keine Leistung entzogen wird. Durch dieses Verfahren wird die modifizierte interne Soll-Leistung 31201 der aktuellen Wärmeleistung der Wärmequelle soweit wie möglich angenähert. Eine konstante Leistungsreduzierung des vorgelagerten Wärmeerzeugers unabhängig vom Stellwert 31501 der Funktion "Offset Wärmequelle" 31500 hätte nur eine Veränderung des Verhältnisses zwischen Ein- und Ausschaltzeit der Wärmequelle zur Folge. Die Anzahl der Ein- und Ausschaltvorgänge bliebe gleich.

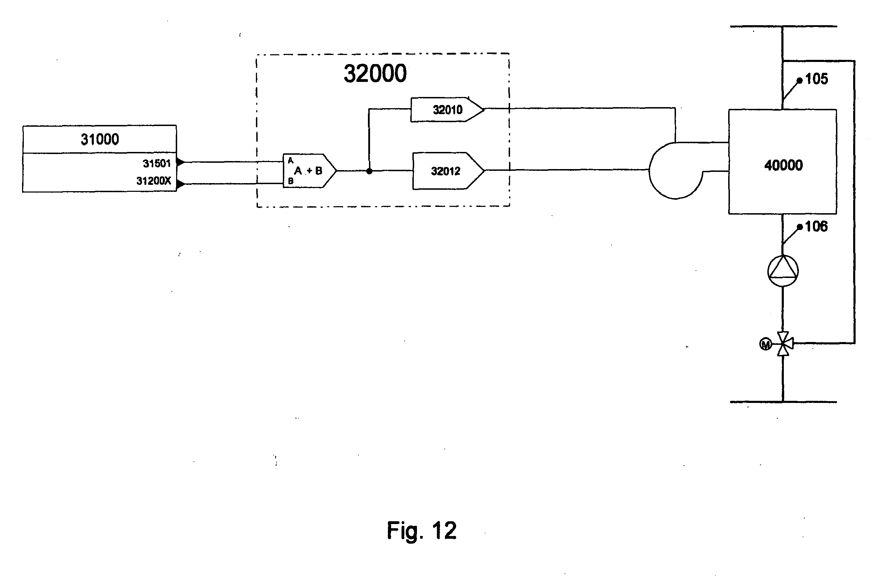

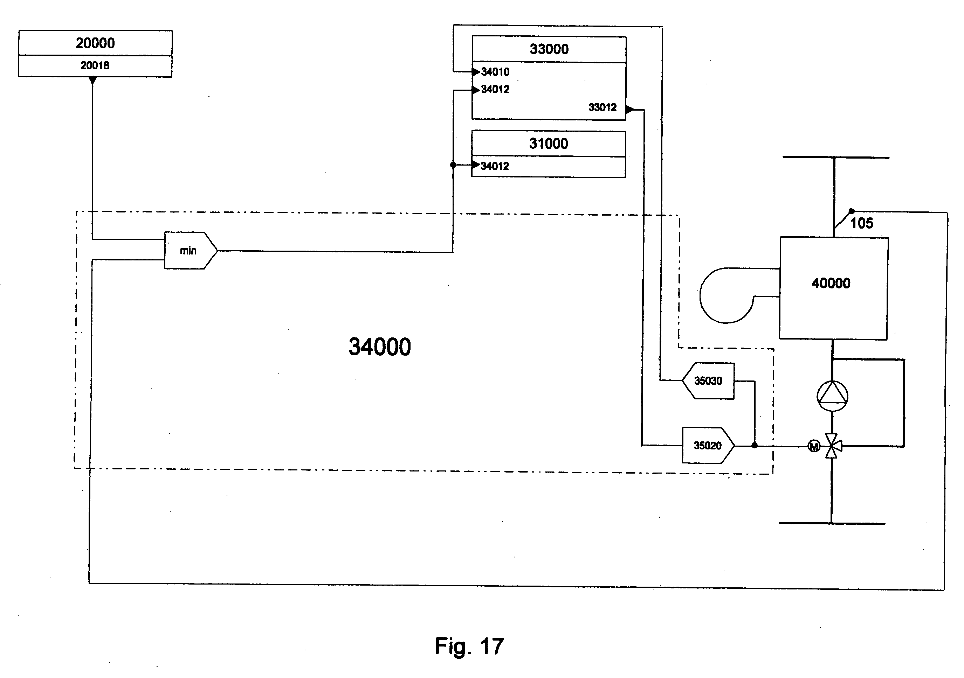

Die Figuren 7 bis 9 zeigen neben der Funktionsgruppe "Temperatursteuerung" 31000 weitere im Modul "Wärmeerzeuger" 30000 enthaltene Funktionen, insbesondere die Funktionen "Brenneransteuerung" 32000, "Pumpenansteuerung" 33000 sowie "Volumenstromreduzierung" 34000 bzw. "Rücklauftemperaturanhebung" 35000. Diese werden in den Figuren 12 bis 17 im Detail dargestellt.

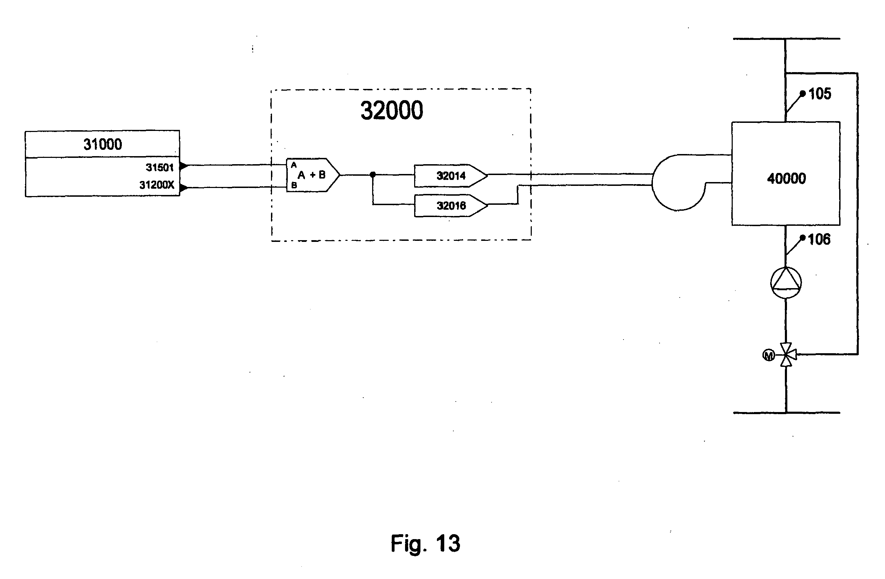

Die in den Figuren 12 und 13 gezeigte Funktion "Brenneransteuerung" 32000 dient der unmittelbaren Ansteuerung der Wärmequelle. Sie erhält von der Funktionsgruppe "Temperatursteuerung" 31000 die Stellgrößen 31200X und 31501. Die beiden Leistungssignale werden zu einer Gesamtleistung addiert. Die Gesamtleistung wird in wärmequellenspezifische Stell- und Freigabe-Signale umgewandelt, so dass die Wärmeleistung der Wärmequelle der seitens der Funktionsgruppe "Temperatursteuerung" 31000 angeforderten Leistung entspricht.

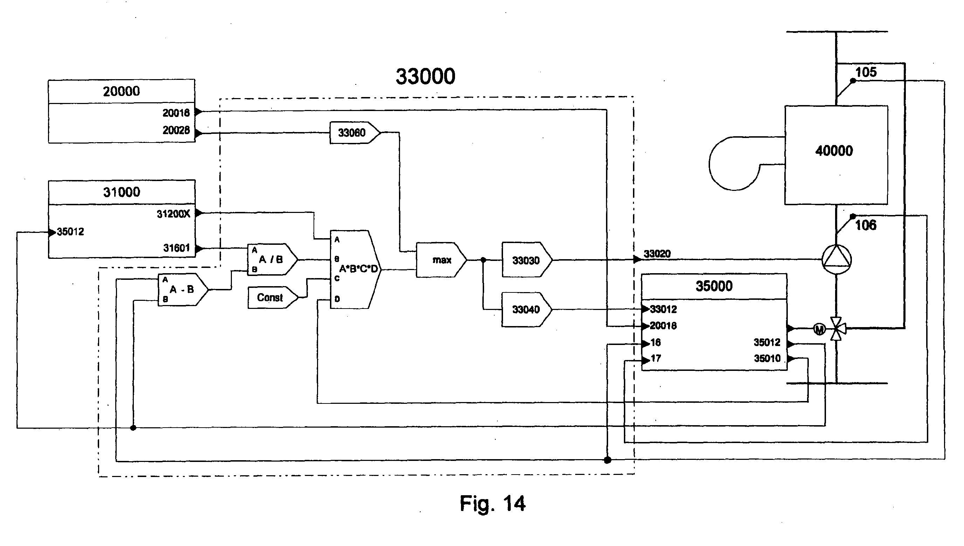

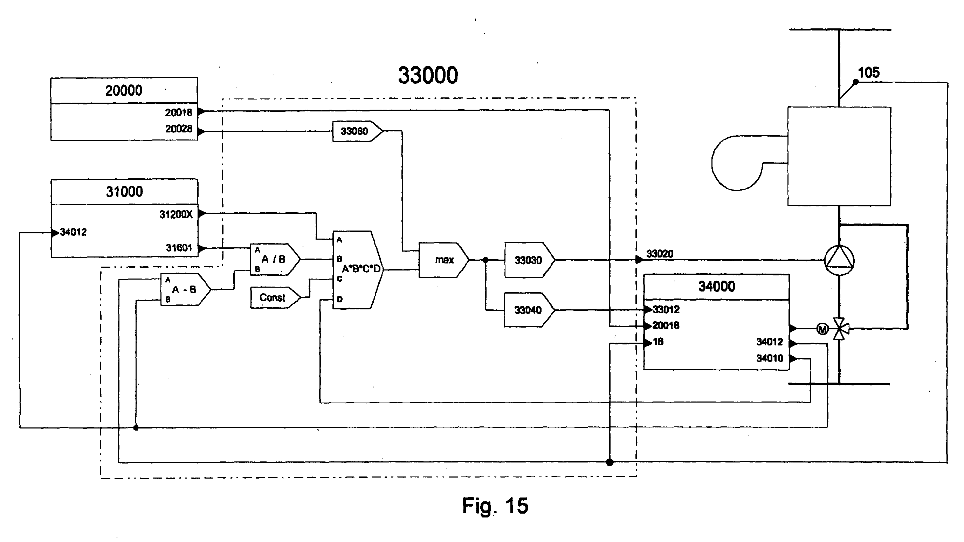

Die in den Figuren 14 und 15 gezeigte Funktion "Pumpenansteuerung" 33000 steuert den Volumenstrom, der durch den Wärmeerzeuger fließt. Die an das Erzeugernetz abgegebene Leistung P ergibt sich gemäß der Formel $P = \zeta \cdot V \cdot c_p \cdot \Delta t$ (1), wobei $\zeta$ die Dichte von Wasser, $\ddot{V}$ der Volumenstrom, $c_p$ die spezifische Wärmekapazität bei konstantem Druck und $\Delta t$ die Temperaturdifferenz zwischen Vorlauf und Rücklauf des Wärmeerzeugers ist. Nachfolgend werden $\zeta$ und $c_p$ als konstant angenommen. Der Volumenstrom $\ddot{V}$ durch den Wärmeerzeuger muss stets zu dessen Wärmeleistung und Betriebstemperaturen passen. Ein zu niedriger Volumenstrom $\ddot{V}$ führt zu einer Überhitzung des Wärmeerzeugers, ein zu hoher Volumenstrom $\ddot{V}$ hat eine sinkende Vorlauftemperatur zur Folge. Es gilt gemäß der obigen Formel (1), dass bei konstanten Vorlauftemperaturen 16 des Wärmeerzeugers und Rücklauftemperaturen 17 des Wärmeerzeugers der Volumenstrom durch den Wärmeerzeuger proportional zu dessen modifizierter interner Soll-Leistung 31200X steigen muss. Gleichzeitig gilt, dass sich bei konstanter modifizierter interner Soll-Leistung 31200X des Wärmeerzeugers der Volumenstrom $\ddot{V}$ umgekehrt proportional zur Temperaturdifferenz $\Delta t$ zwischen der Vorlauftemperatur 16 des Wärmeerzeugers und der Rücklauftemperatur 17 des Wärmeerzeugers verhalten muss. Je niedriger die Temperaturdifferenz $\Delta t$ zwischen Vorlauftemperatur 16 und Rücklauftemperatur 17 des Wärmeerzeugers ist, desto größer muss bei einer konstanten modifizierten internen Soll-Leistung 31200X der Volumenstrom $\ddot{V}$ durch den Wärmeerzeuger sein. Die Temperaturdifferenz zwischen Vorlauftemperatur 16 und Rücklauftemperatur 17 des Wärmeerzeugers darf nur so niedrig sein, dass der benötigte Volumenstrom zum Abtransport der erzeugten Wärmeleistung nicht größer ist, als die Pumpe zu fördern vermag. Reicht der Volumenstrom mangels Pumpleistung nicht aus, muss zur Vermeidung dieses Betriebszustandes die Temperaturdifferenz zwischen Vorlauftemperatur 16 und der Rücklauftemperatur 17 des Wärmeerzeugers erhöht werden. Konkret geschieht dies, indem die interne Soll-Vorlauftemperatur 31301 von der Funktionsgruppe "Temperatursteuerung" 31000 erhöht wird. Ohne die Erhöhung der Temperaturdifferenz wäre der Wärmeerzeuger mangels eines ausreichenden Volumenstroms $\ddot{V}$ nicht in der Lage, im Vollastbetrieb zu laufen. Eine vorzeitige Anforderung eines weiteren Wärmeerzeugers wäre notwendig.

Der benötigte Volumenstrom durch den Wärmeerzeuger steht in direktem Zusammenhang zur modifizierten internen Soll-Leistung 31200X des Wärmeerzeugers und der Temperaturdifferenz zwischen der erzeugerseitigen Soll-Rücklauftemperatur 35012 des Wärmeerzeugers und der Vorlauftemperatur 105 des Wärmeerzeugers. Zusätzlich werden zur Ermittlung des notwendigen Stellsignals für die Regulierung des Volumenstroms noch das Stellsignal 31601 des in der Temperatursteuerung 31000 enthaltenen Verhältnisreglers 31600 und die Nennleistung der Wärmequelle benötigt. Das Stellsignal 31601 Verhältnis teilt der Pumpensteuerung mit, wie hoch die Temperaturdifferenz zwischen Vorlauftemperatur 16 und der Rücklauftemperatur 17 des Wärmeerzeugers bei voller Wärmeerzeugerleistung und Pumpleistung im Verharrungszustand ist.

Die Berechnung des Soll-Volumenstroms in Prozent des Maximal-Volumenstroms geschieht wie folgt: Zunächst wird das Stellsignal Verhältnis 31601 und die Temperaturdifferenz am Wärmeerzeuger zueinander ins Verhältnis gesetzt. Dazu wird das Stellsignal 31601 des Verhältnisreglers 31600 durch die Temperaturdifferenz dividiert. Mit dieser Berechnung wird das umgekehrt proportionale Verhältnis zwischen Volumenstrom und Temperaturdifferenz mathematisch beschrieben. Das Ergebnis dieser Division wird mit der modifizierten internen Soll-Leistung 31200X des Wärmeerzeugers multipliziert. Auf diese Weise wird das proportionale Verhältnis zwischen Wärmeerzeuger-Leistung und Volumenstrom beschrieben. Das Ergebnis der Multiplikation wird wiederum mit einer Konstante multipliziert, die dem Quotienten aus 100% und der Nennleistung der Wärmequelle entspricht. Auf diese Weise wird erreicht, dass der Soll-Volumenstrom einem 0% - 100% - Signal entspricht. Wird der Wärmeerzeuger seitens der Folgesteuerung 20000 als Führungskessel betrieben, wird mittels einer Maximalauswahl aus dem ermittelten Soll-Volumenstrom und einem vorgegebenen Minimal-Volumenstrom, generiert in der Verarbeitungseinheit 33060, verhindert, dass der in das Erzeugernetz abgegebene Volumenstrom einen definierten Wert unterschreitet.

Es wird verhindert, dass die Vorlauftemperatur 16 am Wärmeerzeuger über den Sollwert ansteigt und eine Verschlechterung des Wirkungsgrads des Systems verursacht bzw. die Vorlauftemperatur 16 am Wärmeerzeuger unter den Sollwert fällt und die vorgegebene verbraucherseitige Vorlauftemperatur 15 unterschritten wird.

Nachfolgend sind einige Beispiele dargestellt, welche die mathematischen Zusammenhänge, auf denen die Berechnung des Soll-Volumenstroms beruht, näher erläutern:

Beispiel 1: Das Stellsignal 31601 des Verhältnisreglers 31600 beträgt 20 Kelvin. Die verbraucherseitige Rücklauftemperatur 13 beträgt 40˚C, die Vorlauftemperatur des Wärmeerzeugers 16 beträgt 60˚C. Durch die Gesamtfunktion der Mehrkesselregelung wird eine Rücklauftemperatur-Anhebung der Wärmeerzeuger verhindert. Die Rücklauftemperatur des Wärmeerzeugers 14 beträgt also ebenfalls 40˚C. In diesem Fall entspricht die Temperaturdifferenz von 20 Kelvin am Wärmeerzeuger genau dem Stellsignal 31601 des Verhältnisreglers. Damit die Temperaturdifferenz über den gesamten Leistungsbereich des Wärmeerzeugers konstant bleibt, muss der Volumenstrom proportional zur zu erzeugenden Wärmeleistung 20012 des Wärmeerzeugers erhöht werden. In Prozent ausgedrückt, entspricht in diesem Fall das Stellsignal für die Wärmeleistung genau dem Stellsignal für den Volumenstrom. Wird beispielsweise eine Wärmeleistung von 50% der Maximal-Wärmeleistung vorgegeben, so muss der Volumenstrom ebenfalls 50% des Maximal-Volumenstroms betragen. Wird die Wärmeleistung auf 100% erhöht, muss der Volumenstrom ebenfalls auf 100% erhöht werden. Das Stellsignal 31601 des Verhältnisreglers 31600 und die Temperaturdifferenz des Wärmeerzeugers stehen im Verhältnis 1:1 zueinander.

Beispiel 2: Das Stellsignal 31601 des Verhältnisreglers 31600 beträgt 20 Kelvin. Die verbraucherseitige Rücklauftemperatur 13 beträgt 40˚C, die Vorlauftemperatur des Wärmeerzeugers 16 beträgt 80˚C. Durch die Gesamtfunktion der Mehrkesselregelung wird eine Rücklauftemperatur-Anhebung der Wärmeerzeuger verhindert. Die Rücklauftemperatur des Wärmeerzeugers 17 beträgt also ebenfalls 40˚C. In diesem Fall entspricht die Temperaturdifferenz von 40 Kelvin am Wärmeerzeuger dem zweifachen Stellsignal 31601 des Verhältnisreglers 31600. Damit die Temperaturdifferenz über den gesamten Leistungsbereich des Wärmeerzeugers konstant bleibt, muss der Volumenstrom auch in diesem Fall proportional zur zu erzeugenden Wärmeleistung 20012 des Wärmeerzeugers erhöht werden. In Prozent ausgedrückt, entspricht in diesem Fall das Stellsignal für die Wärmeleistung dem zweifachen Wert des Stellsignals für die Wassermenge. Wird beispielsweise eine Wärmeleistung von 50% der Maximal-Wärmeleistung vorgegeben, so muss der Volumenstrom 25% des Maximal-Volumenstroms betragen. Wird die Wärmeleistung auf 100% erhöht, muss der Volumenstrom auf 50% erhöht werden. Das Stellsignal 31601 des Verhältnisreglers 31600 und die Temperaturdifferenz des Wärmeerzeugers stehen im Verhältnis 1:2 zueinander. In diesem Beispiel darf der Volumenstrom bei voller Leistung des Wärmeerzeugers nur 50% des Maximal-Volumenstroms betragen, ansonsten würde die gewünschte Vorlauftemperatur 16 am Wärmeerzeuger nicht erreicht bzw. überschritten.

Beispiel 3: Das Stellsignal 31601 des Verhältnisreglers 31600 beträgt 20 Kelvin. Die verbraucherseitige Rücklauftemperatur 13 beträgt 40˚C, die Vorlauftemperatur des Wärmerzeugers 16 beträgt 50˚C. Durch die Gesamtfunktion der Mehrkesselregelung wird eine Rücklauftemperatur-Anhebung der Wärmeerzeuger verhindert. Die Rücklauftemperatur des Wärmeerzeugers 17 beträgt also ebenfalls 40˚C. In diesem Fall entspricht die Temperaturdifferenz von 10 Kelvin am Wärmeerzeuger dem halben Stellsignal 31601 des Verhältnisreglers 31600. Soll auch in diesem Fall die Temperaturdifferenz über den gesamten Leistungsbereich des Wärmeerzeugers konstant bleiben, müsste der Volumenstrom proportional zur zu erzeugenden Wärmeleistung 20012 des Wärmeerzeugers auf das Doppelte vom Maximal-Volumenstrom erhöht werden. In Prozent ausgedrückt, entspricht in diesem Fall das Stellsignal für die Wärmeleistung dem halben Wert des Stellsignals für den Volumenstrom. Wird beispielsweise eine Wärmeleistung von 50% der Maximal-Wärmeleistung vorgegeben, so muss der Volumenstrom 100% des Maximal-Volumenstroms betragen. Wird die Wärmeleistung auf 100% erhöht, müsste der Volumenstrom auf 200% erhöht werden. Dies ist logischerweise nicht möglich. Der Maximal-Volumenstrom wird also bereits bei 50% der Maximal-Leistung des Wärmeerzeugers benötigt. Um dennoch die volle Leistung des Wärmeerzeugers nutzen zu können, muss die Vorlauftemperatur 16 des Wärmeerzeugers ab einer Soll-Leistung größer 50% proportional zur Soll-Leistung angehoben werden. Die Anhebung der Vorlauftemperatur 16 des Wärmeerzeugers erfolgt durch die Temperatursteuerung. Das Stellsignal Verhältnis 31601 und die Temperaturdifferenz des Wärmeerzeugers stehen im Verhältnis 1:0,5 zueinander. Ist die Temperaturdifferenz am Wärmeerzeuger kleiner als das Stellsignal 31601 des Verhältnisreglers 31600, wird der maximale Volumenstrom vor der maximalen Wärmeerzeugerleistung erreicht. Sobald der maximale Volumenstrom erreicht ist, muss zur Ausnutzung der maximalen Wärmeerzeugerleistung dessen Temperaturdifferenz durch Erhöhen der Vorlauftemperatur 16 des Wärmeerzeugers vergrößert werden. In diesem Beispiel muss die Vorlauftemperatur 16 des Wärmeerzeugers bei voller Erzeugerleistung mindestens 60˚C betragen. Durch die Beimischfunktion des hydraulischen Entkopplers steigt jedoch nur die erzeugerseitige Vorlauftemperatur 11, die verbraucherseitige Vorlauftemperatur 12 bleibt konstant.

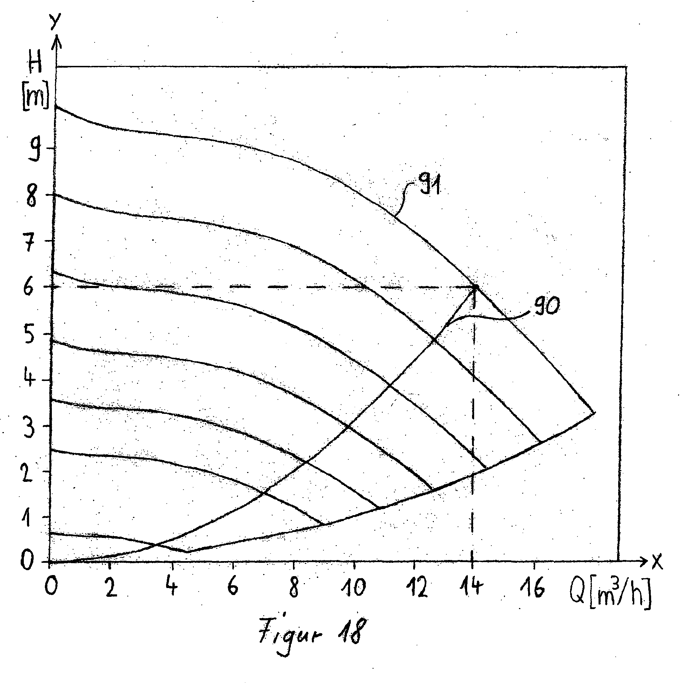

Die Funktion "Pumpenansteuerung" 33000 hat die Aufgabe, eine Stellgröße 33020 für die Pumpe des jeweiligen Wärmeerzeugers zu generieren. Die Fördermenge einer Pumpe verhält sich durch den im Verhältnis zum Durchfluss quadratisch ansteigenden Anlagendruckverlust nicht proportional zur Pumpendrehzahl. Des Weiteren ist der Wirkungsgrad einer Pumpe von Förderstrom und Förderhöhe abhängig. Weiter ist zu beachten, dass die Pumpendrehzahl nicht stetig auf Null abgesenkt werden kann. Konstruktionsbedingt darf eine Pumpe nicht unterhalb ihrer Minimaldrehzahl betrieben werden. Ist die Drehzahlregelung herstellerseitig in die Pumpe integriert, wird dies üblicherweise bereits von dieser verhindert. Das Stellsignal des Soll-Volumenstroms kann deshalb nicht direkt als Stellgröße für die Pumpendrehzahl verwendet werden. Um zum jeweiligen Soll-Volumenstrom die zugehörige Pumpendrehzahl zu ermitteln ist ein dreidimensionales pumpenspezifisches Kennlinienfeld - dargestellt als Figur 18 - in der Pumpenansteuerung 33000 in der Verarbeitungseinheit 33030 (siehe Figur 14) hinterlegt. Auf der X-Achse des Kennlinienfeldes ist typischerweise die Fördermenge Q [m$^3$/h], auf der Y-Achse die Förderhöhe H [m] in das Kennlinienfeld eingetragen. Eine dritte Dimension des Kennlinienfelds stellt die Pumpendrehzahl [%] dar. Mittels dieses Pumpen-Kennlinienfeldes kann zu jeder möglichen Kombination aus Fördermenge Q und Förderhöhe H (Betriebspunkt) die zugehörige Pumpendrehzahl ermittelt werden. Dazu wird eine Anlagenkennlinie 90, die entweder vorgegeben ist oder automatisch ermittelt wird, in die X-Y-Ebene der Pumpenkennlinie eingetragen. Die Anlagenkennlinie 90 beginnt bei drucklosen Erzeugernetzen immer im Schnittpunkt von Null-Fördermenge und Null-Förderhöhe. Anschließend wird der maximal mögliche Volumenstrom, der durch den Wärmeerzeuger fließt, berechnet. Der maximale Volumenstrom, den die Pumpe zur Verfügung stellt, wird nach folgender Formel berechnet:

$$\dot{V} = \frac{P}{\varsigma \cdot c_p \cdot \Delta t} \quad (2).$$

Hierbei steht P für die Nennleistung der Wärmequelle und $\Delta t$ für die Stellgröße Verhältnis 31601, $\zeta$ und $c_p$ werden als konstant angenommen. Zu diesem rechnerisch ermittelten Volumenstrom wird mittels der Pumpenkennlinie die maximal mögliche Förderhöhe ermittelt. Dieser Punkt liegt immer auf der Pumpenkennlinie für Maximaldrehzahl 91 der Pumpe und ist gleichzeitig der Endpunkt der Anlagenkennlinie 90. Es wird der Startpunkt der Anlagenkennlinie 90 und der Endpunkt der Anlagenkennlinie 90 mit einer quadratisch ansteigenden Kurve, der Anlagenkennlinie 90, verbunden. Mittels dieser Anlagenkennlinie 90 kann zu einer Soll-Fördermenge die jeweils vom Anlagenwiderstand abhängige zugehörige Förderhöhe und die daraus resultierend notwendige Pumpendrehzahl ermittelt werden. Da bislang der Soll-Volumenstrom nur als Prozentwert vorliegt, muss dieser zur Ermittlung der Pumpenleistung bzw. Pumpendrehzahl in einen absoluten Wert umgerechnet werden. Dazu wird der rechnerisch ermittelte maximale Volumenstrom mit dem Prozentwert des Soll-Volumenstroms multipliziert. Jetzt kann die Soll-Drehzahl der Pumpe direkt im Kennlinienfeld abgelesen werden. Liegt der berechnete Soll-Volumenstrom über dem maximalen Volumenstrom, wird die Pumpe mit ihrer Maximal-Drehzahl betrieben. Liegt der berechnete Soll-Volumenstrom unterhalb des durch die Minimal-Drehzahl bedingten Minimal-Volumenstroms der Pumpe, wird die Pumpe mit ihrer Minimal-Drehzahl betrieben. Der Volumenstrom kann also nicht allein mittels der Pumpe auf Null abgesenkt werden. Fällt der Soll-Volumenstrom unter den Minimal-Volumenstrom der Pumpe, wird das Signal Volumenstromreduzierung 33012 von der Verarbeitungseinheit 33040 proportional zum Soll-Volumenstrom stetig von 100% auf 0% reduziert. Die Reduzierung des in das Erzeugernetz abgegebenen Volumenstroms unter den Minimal-Volumenstrom der Pumpe erfolgt durch stetiges Schließen des Durchgangspfades des zum jeweiligen Wärmeerzeuger gehörenden Ventils. Das Ventil ist vorzugsweise als ein Mischventil ausgebildet und im Rücklauf des jeweiligen Wärmeerzeugers angeordnet. Alternativ kann auch ein Verteilventil im Vorlauf des jeweiligen Wärmeerzeugers eingesetzt werden. Das Mischventil bzw. das Verteilventil ist vorzugsweise als ein Regelventil ausgebildet.

Das Modul "Wärmeerzeuger" kann zudem alternativ die Funktion "Volumenstromreduzierung" 34000 oder die Funktion "Rücklauftemperaturanhebung" 35000 beinhalten.

Zunächst soll die Funktion "Volumenstromreduzierung" 34000 beschrieben werden. Bedingt durch die Minimal-Drehzahl der Pumpe des jeweiligen Wärmeerzeugers kann der Volumenstrom nicht allein mittels der Pumpe stetig bis auf Null reduziert werden. Liegt der Soll-Volumenstrom unterhalb der minimalen Fördermenge der Pumpe, muss der in das Erzeugernetz abgegebene Volumenstrom mittels des Ventils reduziert werden. Dazu muss beispielsweise das als Mischventil ausgebildete Ventil in Durchflussrichtung vor der im Rücklauf des Wärmeerzeugers eingebauten Pumpe installiert sein. Bei Wärmeerzeugern, die keine Rücklauftemperaturanhebung benötigen, wird der Bypasspfad des Mischventils mit dem Rücklauf des Wärmeerzeugers verbunden. Ein Stellsignal 33012 der Pumpenansteuerung 33000 beschreibt den Anteil des Volumenstroms durch den Durchgangspfad in Prozent zum Gesamtvolumenstrom durch das Ventil. 100% abzüglich des Stellsignals Volumenstromreduzierung 33012 beschreibt den Anteil des Volumenstroms durch den Bypasspfad in Prozent zum Gesamtvolumenstrom. Fällt das Signal Volumenstromreduzierung 33012 unter 100 %, wird der Durchgangspfad des Ventils stetig geschlossen, während der Bypasspfad stetig geöffnet wird. Bei einem Sollvolumenstrom von 0 % ist der Durchgangspfad geschlossen und der Bypasspfad vollständig geöffnet. Da der Gesamt-Wasserwiderstand des Durchgangspfades durch den in Reihe geschalteten Wärmeerzeuger höher ist als der Wasserwiderstand des Bypasspfades, verändert sich der Gesamtwasserwiderstand des Wärmeerzeugers in Abhängigkeit der Ventilstellung. Hinzu kommt, dass die KV-Werte, also der stellwegabhängige Wasserwiderstand des Ventils, des Durchgangspfades und des Bypasspfades, meist unterschiedlich groß sind und sich der KV-Wert eines Pfades nicht proportional zur Ventilstellgröße ändert. Das Signal Volumenstromreduzierung 33012 kann deshalb nicht direkt auf das Ventil aufgeschaltet werden.

Die hubabhängigen KV-Werte des Durchgangspfades und des Bypasspfades müssen im gleichen Verhältnis wie die Volumenströme zueinander stehen. Dann entspricht der Volumenstrom durch den Durchgangspfad dem Signal Volumenstromreduzierung 33012. Mittels einer im Rahmen der Funktion "Volumenstromreduzierung" 34000 hinterlegten Ventilkennlinie und weiterer den hydraulischen Kreislauf bestimmender Größen wird das Stellsignal Volumenstromreduzierung 33012 von der Verarbeitungseinheit 35020 in eine Ventil-Stellgröße umgewandelt, die dem benötigtem KV-Verhältnis von Durchgangs- zu Bypasspfad entspricht.

Zu beachten ist, dass in den KV-Wert des Durchgangspfades des beispielsweise als Regelventil ausgebildeten Mischventils der Wasserwiderstand des Kessels und des Rohrnetzes zwischen Kessel und dem hydraulischen Entkoppler einzurechnen ist. Ändert sich in Abhängigkeit der Ventilstellung der Gesamt-Wasserwiderstand des Wärmeerzeugers, muss die prozentuale Änderung des Gesamt-KV-Wertes des Wärmeerzeugers gegenüber dem Referenzwert als Korrekturfaktor Wasserwiderstand 34010 von der Verarbeitungseinheit 35030 ermittelt und an die Funktion Pumpenansteuerung 33000 übergeben werden. Die Funktion des Signals 34010 und des weiter unten beschriebenen Signals 35010 ist identisch.

Die erzeugerseitige Soll-Rücklauftemperatur 34012 wird mittels einer Minimalauswahl aus der von der Folgesteuerung 20000 übermittelten errechneten verbraucherseitigen Rücklauftemperatur 20018 und der Vorlauftemperatur 16 des Wärmeerzeugers gebildet. Die so ermittelte erzeugerseitige Soll-Rücklauftemperatur 34012 wird an die Funktionen Pumpenansteuerung 33000 und Temperatursteuerung 31000 übergeben. Das Signal erzeugerseitige Soll-Rücklauftemperatur 34012 und das weiter unten beschriebene Signal erzeugerseitige Soll-Rücklauftemperatur 35012 werden nach unterschiedlichen Verfahren gebildet, haben in der Wärmeerzeugersteuerung 30000 jedoch die gleiche Funktion. Die Wirkung der Signale 34012 und 35012 ist identisch.

Die Funktion "Rücklauftemperaturanhebung" 35000 hat zwei Aufgaben. Zum einen muss sie sicherstellen, dass eine wärmeerzeugerspezifische Soll-Rücklauftemperatur 60020 nicht unterschritten wird. Zum anderen hat sie die Aufgabe, das Stellsignal 33012 zur Volumenstromreduzierung auszuwerten und das Ventil für die Rücklauftemperaturanhebung zur Reduzierung des in das Erzeugernetz abgegebenen Volumenstroms zu beeinflussen. Die Funktion "Rücklauftemperaturanhebung" 35000 zeichnet sich dadurch aus, dass sie die Stellgröße für das Regelventil nicht regelungstechnisch ermittelt, sondern nach einem mathematischen Verfahren, adaptiert durch einen KorrekturRegler, berechnet. Zunächst wird die erzeugerseitige Soll-Rücklauftemperatur 35012 berechnet. Dazu wird mittels einer Maximalauswahl die von der Folgesteuerung 20000 übermittelte errechnete verbraucherseitige Rücklauftemperatur 20018 mit der vorgegebenen wärmeerzeugerspezifischen Soll-Rücklauftemperatur 60020 verglichen. Durch die folgende Minimalauswahl wird verhindert, dass die Soll-Rücklauftemperatur über der Vorlauftemperatur 16 des Wärmeerzeugers liegt. Die so ermittelte erzeugerseitige Soll-Rücklauftemperatur 35012 wird an die Funktionen "Pumpenansteuerung" 33000 und "Temperatursteuerung" 31000 übergeben. Die erzeugerseitige Soll-Rücklauftemperatur 35012 und das weiter oben beschriebene Signal erzeugerseitige Soll-Rücklauftemperatur 34012 werden nach unterschiedlichen Verfahren gebildet, haben in der Wärmeerzeugersteuerung 30000 jedoch die gleiche Funktion. Die Wirkung der Signale 34012 und 35012 ist identisch.

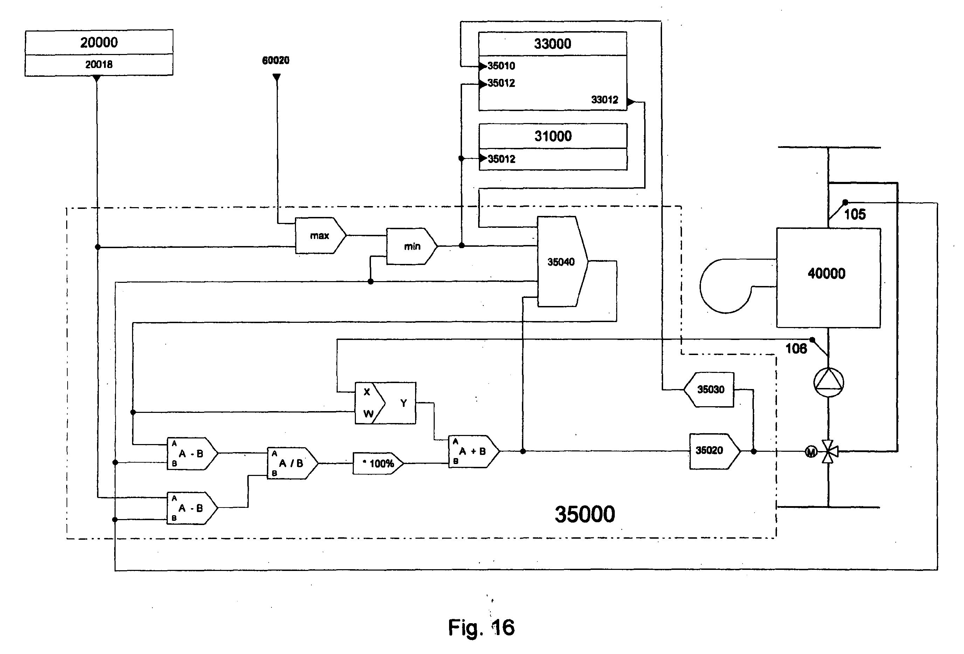

In der Funktion "Rücklauftemperaturanhebung" 35000 wirkt die Volumenstromreduzierung indirekt auf das Regelventil. Fällt das Signal Volumenstromreduzierung 33012 unter 100 %, wird die Soll-Rücklauftemperatur am Ausgang einer Verarbeitungseinheit 35040 (Figur 16) für die Berechnung der Ventilstellgröße stetig von der Verarbeitungseinheit 35040 auf die Vorlauftemperatur 16 des Wärmeerzeugers angehoben. Beträgt das Stellsignal der Volumenstromreduzierung 0 %, entspricht die Soll-Rücklauftemperatur, gebildet von der Verarbeitungseinheit 35040, der Vorlauftemperatur 16 des Wärmeerzeugers. Ändert sich in Abhängigkeit der Ventilstellung der Gesamt-Wasserwiderstand des Wärmeerzeugers, muss die prozentuale Änderung des Gesamt-KV-Wertes des Wärmeerzeugers gegenüber dem Referenzwert als Korrekturfaktor Wasserwiderstand 35010 an die Funktion Pumpenansteuerung 33000 übergeben werden. Die Funktion des Signals 35010 und des weiter oben beschriebenen Signals 34010 ist identisch. Zusätzlich wird die von der Verarbeitungseinheit 35040 berechnete Soll-Rücklauftemperatur, auf deren Basis das Mischungsverhältnis zwischen Vor- und Rücklaufwasser berechnet wird, mit dem vom Korrekturregler adaptierten Soll-Mischungsverhältnis beeinflusst. Überschreitet das adaptierte Mischungsverhältnis 100 %, wird die von der Verarbeitungseinheit 35040 ermittelte Soll-Rücklauftemperatur von dieser erhöht. Fällt das adaptierte Mischungsverhältnis unter 0 %, wird die von der Verarbeitungseinheit 35040 ermittelte Soll-Rücklauftemperatur von dieser verringert. Auf diese Weise wird verhindert, dass die Stellgröße des Korrekturreglers bei Sollwertabweichung, die nicht durch eine Veränderung der Ventilstellung ausgeglichen werden können, unbegrenzt erhöht bzw. verringert.

**Patentansprüche**

1. Verfahren zum Betreiben eines Systems zum Transport thermischer Energie über ein flüssiges Medium, wobei das System einen Erzeugerkreis (1) und einen Verbraucherkreis (2) umfasst, die über einen Entkoppler (100) miteinander verbunden sind, **dadurch gekennzeichnet, dass** eine Vorlauftemperatur (12) des Verbraucherkreises (2) ohne Anhebung der Rücklauftemperatur (14) des Erzeugerkreises (1) durch eine Regelung und/oder Steuerung zumindest eines Wärmeerzeugers des Erzeugerkreises (1) in Abhängigkeit von Temperaturwerten (11, 12, 13, 14, 16, 17) geregelt wird, die durch Sensoreinrichtungen (101 bis 106) zur Erfassung der Temperatur des flüssigen Mediums im Erzeugerkreis (1) und im Verbraucherkreis (2) gemessen werden.

2. Verfahren nach Anspruch 1, **dadurch gekennzeichnet, dass** die Vorlauftemperatur (12) des Verbraucherkreises (2) auch bei einer schwankenden Vorlauftemperatur (11) des Erzeugerkreises (1) auf einen vorgebbaren Wert geregelt und/oder gesteuert wird, wobei einem Verbrauchernetzvorlaufvolumenstrom eine bestimmte Menge an flüssigem Medium aus einem Verbrauchernetzrücklaufvolumenstrom gezielt beigemischt wird.

3. Verfahren nach einem der Ansprüche 1 oder 2, **dadurch gekennzeichnet, dass** mittels der Regelung und/oder Steuerung eine Soll-Vorlauftemperatur an dem mindestens einen Wärmeerzeuger und eine Ist-Vorlauftemperatur (16) an dem mindestens einen Wärmeerzeuger miteinander verglichen werden und daraus eine Stellgröße (31601) generiert wird, die sich proportional zur Differenz zwischen der Vorlauftemperatur (16) an dem jeweiligen Wärmeerzeuger und einer Rücklauftemperatur (17) des jeweiligen Wärmeerzeugers bei Nennleistung des jeweiligen Wärmeerzeugers und bei maximaler Förderleistung einer dem jeweiligen Wärmeerzeuger zugeordneten Pumpe im stationären Zustand verhält.

4. Verfahren nach einem der Ansprüche 1 bis 3, **dadurch gekennzeichnet, dass** ein durch den Wärmeerzeuger in den Erzeugerkreis (1) fließender Volumenstrom von der Regelung und/oder Steuerung derart gesteuert und/oder geregelt wird, dass er sich im Wesentlichen proportional zu einer von dem Wärmeerzeuger an den Volumenstrom abzugebenden Wärmeleistung und im Wesentlichen umgekehrt proportional zu der Differenz aus der Vorlauftemperatur (16) an dem Wärmeerzeuger und dessen Rücklauftemperatur (17) verhält.

5. Verfahren nach einem der Ansprüche 1 bis 4, **dadurch gekennzeichnet, dass** die Drehzahl einer dem Wärmeerzeuger zugeordneten Pumpe in Abhängigkeit von der Leistung des mindestens einen Wärmeerzeugers derart eingestellt wird, dass die Rücklauftemperatur (14) des Erzeugerkreises (1) nicht höher als die verbraucherseitige Rücklauftemperatur (13) ist.

6. Verfahren nach einem der Ansprüche 1 bis 5, **dadurch gekennzeichnet, dass** mindestens einer der Wärmeerzeuger unabhängig von einer vorgebbaren Vorlauftemperatur (12) des Verbraucherkreises (2) und/oder einer Rücklauftemperatur (13) des Verbraucherkreises (2) mit Nennleistung betrieben wird.

7. Verfahren nach einem der vorstehenden Ansprüche, **dadurch gekennzeichnet, dass** im Rahmen der Regelung der Vorlauftemperatur (12) des Verbraucherkreises (2) bei Bedarf gezielt einzelne oder mehrere der Wärmeerzeuger zugeschaltet beziehungsweise abgeschaltet wird.

8. Verfahren nach Anspruch 7, **dadurch gekennzeichnet, dass** eine zu erzeugende Wärmeleistung derart auf mehrere Wärmeerzeuger verteilt wird, dass möglichst viele der zugeschalteten Wärmeerzeuger mit ihrem optimalen Wirkungsgrad betrieben werden.

9. Verfahren nach einem der vorstehenden Ansprüche 7 oder 8, **dadurch gekennzeichnet, dass** der von dem Erzeugerkreis (1) abgegebene Volumenstrom derart gesteuert und/oder geregelt ist, dass verhindert wird, dass ein Teil dieses Volumenstroms vom Vorlauf des Erzeugerkreises (1) über den Entkoppler (100) in den Rücklauf des Erzeugerkreises (1) gelangt.

10. Verfahren nach einem der vorstehenden Ansprüche, **dadurch gekennzeichnet, dass** die Vorlauftemperatur (16) zumindest eines Wärmeerzeugers in Abhängigkeit von der Rücklauftemperatur (17) des Wärmeerzeugers derart eingestellt wird, dass sie einen für die Umsetzung der durch die Steuerung und/oder Regelung von dem Wärmeerzeuger angeforderten Wärmeleistung notwendigen Wert um maximal 2 Kelvin übersteigt.

11. Verfahren nach einem der vorstehenden Ansprüche, **dadurch gekennzeichnet, dass** die Vorlauftemperatur (16) zumindest eines Wärmeerzeugers durch die Regelung und/oder Steuerung unabhängig von der von dem Wärmeerzeuger angeforderten und somit in den Erzeugerkreis (1) abzugebenden Wärmeleistung gesteuert und/oder geregelt wird.

12. Verfahren nach Anspruch 11, **dadurch gekennzeichnet, dass** die Vorlauftemperatur (16) zumindest eines Wärmeerzeugers auf einen geforderten Wert angehoben wird, indem der Wärmeerzeuger bis zum Erreichen des Werts mit einer höheren als zum Erreichen des Werts erforderlichen Wärmeleistung betrieben wird.

13. Verfahren nach Anspruch 11, **dadurch gekennzeichnet, dass** die Vorlauftemperatur (16) zumindest eines Wärmeerzeugers auf einen geforderten Wert reduziert wird, indem der Wärmeerzeuger bis zum Erreichen des Werts mit einer niedrigeren als zum Erreichen des Werts erforderlichen Wärmeleistung betrieben wird.

14. Verfahren nach einem der vorherstehenden Ansprüche, **dadurch gekennzeichnet, dass** ein dem jeweiligen Wärmeerzeuger zugeordnetes Mischventil und/oder Verteilventil von der Regelung und/oder Steuerung zur Anhebung der Rücklauftemperatur (17) des Wärmeerzeugers und/oder zur Reduzierung des in den Erzeugerkreis (1) von dem Wärmeerzeuger abgegebenen Volumenstroms gesteuert und/oder geregelt wird.

15. System zum Transport thermischer Energie über ein flüssiges Medium, wobei das System einen Erzeugerkreis (1) und einen Verbraucherkreis (2) umfasst, die über einen Entkoppler (100) miteinander verbunden sind, **dadurch gekennzeichnet, dass** das System Mittel zur Ausführung eines Verfahrens nach einem der Ansprüche 1 bis 14 aufweist.

16. System nach Anspruch 15, **dadurch gekennzeichnet, dass** die Mittel zur Ausführung des Verfahrens eine Steuerungs- und/oder Regelungseinrichtung (10000, 20000, 30000, 30000n) zur Steuerung und/oder Regelung des Systems umfassen, wobei die Steuerungs- und/oder Regelungseinrichtung (10000, 20000, 30000, 30000n) mittels eines darin abgelegten Pumpenkennlinienfeldes für die dem jeweiligen Wärmeerzeuger zugeordnete Pumpe mit einer Anlagenkennlinie (90) zu einem von der Steuerungs- und/oder Regelungseinrichtung vorgegebenen den jeweiligen Wärmeerzeuger durchfließenden Volumenstrom eine zugehörige Pumpendrehzahl ermittelt.

Fig. 1

Fig. 2

Fig. 3

Fig. 4

Fig. 5

EP 2 187 136 A2

Fig. 6

EP 2 187 136 A2

Fig. 7

Fig. 8

EP 2 187 136 A2

Fig. 9

Fig. 10

EP 2 187 136 A2

Fig. 11

Fig. 12

28

Fig. 13

EP 2 187 136 A2

Fig. 14

Fig. 15

Fig. 16

Fig. 17

EP 2 187 136 A2

Figur 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1154205 B1

- EP 0874200 A1